# EUROPÄISCHE PATENTSCHRIFT

(11) **EP 3 082 391 B1**
(45) Veröffentlichungstag und Bekanntmachung des Hinweises auf die Patenterteilung: **10.04.2024**
(21) Anmeldenummer: 14816133.4
(22) Anmeldetag: 17.12.2014
(51) Int. Cl.: A01B 59/06, B60D 1/64, E02F 3/36

(54) **FAHRZEUG MIT EINEM AUTOMATISCHEN KUPPLUNGSSYSTEM**
VEHICLE WITH AUTOMATIC COUPLING SYSTEM
VÉHICULE PRÉSENTANT SYSTÈME DE COUPLAGE AUTOMATIQUE

(30) Priorität: 18.12.2013 DE 102013021623; 18.02.2014 DE 102014002376
(43) Veröffentlichungstag der Anmeldung: 26.10.2016
(73) Patentinhaber: Mösl, Thomas, 5201 Seekirchen (AT)
(72) Erfinder: Mösl, Thomas, 5201 Seekirchen (AT)
(74) Vertreter: Samson & Partner Patentanwälte mbB
(86) Internationale Anmeldenummer: PCT/EP2014/003406
(87) Internationale Veröffentlichungsnummer: WO 2015/090587

(56) Entgegenhaltungen:
- EP-A1- 1 365 074
- WO-A1-2013/064148
- CA-C- 2 245 883
- DE-A1- 2 900 866

## Beschreibung

Die Erfindung betrifft ein automatisches Kupplungssystem nach dem Oberbegriff des Anspruchs 1.

Die Erfindung betrifft auch ein Fahrzeug, das mit einem derartigen Kupplungssystem ausgestattet ist.

In diesen Unterlagen beziehen sich Lagebezeichnungen, wie "oben", "unten", "vorne", "hinten", etc. aus Sicht eines Fahrers eines Fahrzeugs, der aus dem Fahrzeug das Arbeitsgerät betrachtet.

### Stand der Technik

Automatische Kupplungssysteme sind in verschiedenen Ausführungen bekannt. Automatische Kupplungssysteme dienen dazu, eine oder mehrere hydraulische und/oder elektrische und/oder pneumatischen Leitungen eines Fahrzeugs mit entsprechenden einer oder mehreren Leitungen eines Arbeitsgeräts zu verbinden, derart, dass ein Fluidfluss zwischen den Leitungen oder eine elektrische Verbindung zwischen den Leitungen ermöglicht wird.

Das Dokument WO 2013/064148 A1 offenbart ein automatisches Kupplungssystem, Fahrzeug im Sinne der Erfindung umfasst beispielsweise PKW, LKW, Elektroautos oder aber Arbeitsmaschinen wie zum Beispiel Hoftrac, Traktoren jeglicher Art, Radlader, Teleskoplader, Stapler jeglicher Ausführungen und vergleichbar Fahrzeuge.

Arbeitsgerät im Sinne der Erfindung umfasst hydraulische und/oder elektrische Geräte, wie zum Beispiel Greifer, Greifzangen, klappbare Arbeitsgeräte, Hochkippschaufel, Palettengabel mit hydraulischer Gabelverstellung, Ballengreifer oder Rollengreifer, Kehrmaschinen, Futtermischschaufeln, Siloentnahmezange, Erdbohrer, Staplerhubmast, Betonmischer, Heckenschere, hydraulische Schneeschilder, Schneefräse und sonstige Werkzeuge.

Bei existierenden Kupplungssystemen sind oftmals eine erste Kuppeleinheit am Fahrzeug und eine zweite Kuppeleinheit am jeweiligen Arbeitsgerät nicht frei gelagert. Bei Aufnahme des jeweiligen Arbeitsgerätes durch das Fahrzeug müssen die beiden Kuppeleinheiten einander spielfrei gegenüberliegen. Bei Gebrauch kann ein Spiel zwischen der Befestigung des Arbeitsgeräts und dem Fahrzeug und damit zwischen den Kuppeleinheiten entstehen. Das abnutzungsbedingte Spiel kann zu Beschädigungen und damit zu Undichtigkeiten an den Kuppeleinheiten und insbesondere deren Steckverbindungen führen.

Allgemein sind bei Fahrzeugen insbesondere Arbeitsmaschinen, beispielsweise Bagger, Raupen eine Kupplung vorgesehen, um Arbeitsgeräte, etwa Baggerschaufeln, Greifer jeglicher Art und ähnliches mit den Fahrzeugen zu verbinden. Dabei ist oftmals die fahrzeugseitige Kupplungseinheit in einem sogenannten Schnellwechselrahmen, beispielsweise einem genormten Euroschnellwechselrahmen vorgesehen, der mit dem Fahrzeug beispielsweise an einem entsprechenden Träger, etwa einem Frontlader angebracht. Solche Schnellwechselkupplungen dienen dazu, die entsprechenden Arbeitsgeräte vom Fahrzeug aus wechseln zu können. Um das Fahrzeug bzw. den Schnellwechselrahmen mit dem Arbeitsgerät zu verbinden, sind im Fahrzeug entsprechende Steuergeräte vorgesehen.

Bei hydraulischen und/oder elektrischen und/oder pneumatischen Arbeitsgeräten ist zusätzlich eine Versorgung mit einem Hydraulikfluid und/oder elektrischer Energie erforderlich, um beispielsweise ein Öffnen oder Schließen eines Greifers zu ermöglichen. Dazu sind Leitungen jeweils am Fahrzeug und am Arbeitsgerät vorgesehen. Zur Verbindung der jeweiligen Leitungen sind entsprechende Kupplungselemente vorgesehen. Die entsprechenden Verbindungsanschlüsse der Leitungen sind in jeweiligen Kupplungseinheiten einmal fahrzeugseitig und einmal geräteseitig vorgesehen. Die aus dem Stand der Technik bekannten Schnellwechselkupplungen benötigen eine spielfreie Verbindung der jeweiligen Kupplungseinheiten.

Beispielsweise ist von der Firma "OilQuick" ein automatisches Schnellwechselsystem für Lademaschinen zum An- und Abkuppeln von hydraulischen Arbeitsgeräten bekannt. Das Arbeitsgerät, beispielsweise Werkzeuge wie etwa ein Holzgreifer, Hochkippschaufel, Palettengabel mit hydraulischer Gabelverstellung etc. lässt sich automatisch auswechseln. Die jeweiligen Kuppeleinheiten sind dabei am sogenannten Schnellwechselrahmen, der mit dem Fahrzeug verbindbar ist, und an dem Arbeitsgerät nicht frei gelagert.

Ferner ist von der Firma Hydrac eine sogenannte "Autoconnect" automatische Schnellwechselplatte bekannt, für einen Schnellwechsel von Hydraulikarbeitsgeräten am Frontlager eines Traktors. Die Kupplungseinheiten sind hier ebenfalls nicht frei gelagert an dem Arbeitsgerät und der am Frontlader angebrachten Schnellwechselplatte vorgesehen.

### Aufgabe und Lösung der Erfindung

Aufgabe der vorliegenden Erfindung ist es, ein anderes, insbesondere verbessertes Kupplungssystem sowie ein mit diesem Kupplungssystem ausgestattetes Fahrzeug bereitzustellen.

Diese Aufgabe wird jeweils durch die Gegenstände der unabhängigen Ansprüche 1 und 19 gelöst.

Gemäß Anspruch 1 ist das gattungsbildende automatische Kupplungssystem, also dadurch gekennzeichnet, dass eine Fördervorrichtung vorgesehen ist, die ausgelegt ist, den geräteseitigen Leitungsträger aus dessen Lagerungsposition zur lösbaren Verbindung der beiden Leitungsträger in eine Verbindungsposition zu verbringen und in dieser zu halten, um eine Fluid- und/oder elektrische Verbindungen der beiden wenigstens einen Leitung zu ermöglichen, wobei der geräteseitige Leitungsträger in seiner Verbindungsposition frei vom geräteseitigen Aufnahmeelement gelagert ist und wobei die Fördereinrichtung einen bewegbaren Schlitten umfasst, der in einem ihn umgebenden Außenrahmen verschiebbar gelagert ist.

Das gattungsbildende Fahrzeug zeichnet sich gemäß Anspruch 19 39- dadurch aus, dass es mit einem automatischen Kupplungssystem gemäß einem der Ansprüche 1 bis 18 versehen ist.

Das erfindungsgemäße Kupplungssystem ermöglicht ein Ankuppeln bzw. Verbinden von wenigstens einer Leitung ohne vom Fahrzeug absteigen zu müssen. In Abhängigkeit von der Dimensionierung des Kupplungssystems bzw. der Leitungsträger können beliebig viele Leitungen, beispielsweise vier oder mehr miteinander gekoppelt werden.

Da der geräteseitige Leitungsträger über die Fördervorrichtung in eine fahrzeugseitige Verbindungsposition verbracht wird, ist dieser im verbundenen Zustand flexibel und frei von Einflüssen der Verbindung zwischen Fahrzeug und Arbeitsgerät. Ein etwaig aufgrund von Abnutzung entstehendes Spiel zwischen der Verbindung Fahrzeug und Arbeitsgerät hat daher keinen Einfluss auf die Verbindung der beiden Leitungsträger. Somit wird auch ein nachträglich entstandenes Spiel, das durch ständigen Gebrauch entstehen kann, weitgehend toleriert, ohne dass die Verbindungen der Leitungen über die Leitungsträger belastet oder beschädigt werden.

Aufgrund des einfachen Aufbaus des erfindungsgemäßen Kupplungssystems ist auch ein Nachrüsten älterer Fahrzeuge und Arbeitsgeräte möglich, ohne die Arbeitsgeräte austauschen zu müssen. Wesentliche Änderungen am Fahrzeug bzw. den Arbeitsgeräten sind nicht erforderlich.

Insbesondere sind die Kuppeleinheiten bzw. Leitungsträger nicht starr angeordnet, da der geräteseitige Leistungsträger sich entweder in seiner Lagerungsposition am Arbeitsgerät befindet, oder von der Fördervorrichtung in seine Verbindungsposition am fahrzeugseitigen Leistungsträger verbracht wird, in der ihn die Fördervorrichtung hält, sichert und verriegelt. Die Fördervorrichtung verbringt den geräteseitige Leistungsträger beim entkuppeln auch wieder in seine Lagerungsposition.

Da der Kupplungsvorgang automatisch erfolgt, muss der Fahrer nicht das Fahrzeug verlassen, was wiederum die Unfallgefahr beispielsweise durch Stürze wie etwa beim Ausrutschen, Stolpern aus oder in das Fahrzeug hinein verringert. Zusätzlich ermöglicht das erfindungsgemäße Kupplungssystem auch ein An- und Entkuppeln der jeweiligen Leitungen unter Druck da ein händisches Kuppeln entfällt. Beim Abstellen hydraulischer Arbeitsgeräte kann sich nämlich der Druck in hydraulischen Leitungen, beispielsweise durch Sonneneinstrahlung oder sonstige Erwärmung, erhöhen. Aufgrund der Ausdehnung des Fluids, insbesondere Öl, ist ein händischer Kuppelvorgang erschwert oder kaum möglich. Zusätzlich entfallen bei einem automatischen Kuppeln Manipulation an den Leitungen und/oder Kupplungselementen, die ansonsten bei händischem Kupplungsvorgang aufgrund des Restdruckes zumeist erforderlich sind. Insbesondere ein Aufschrauben der Leitungen oder ein Druckablassen mittels beispielsweise einer handelsüblichen Druckablasszange ist nicht erforderlich. Somit lässt sich auch ein hoher Ölverlust vermeiden und damit Kosten für den jeweiligen Unternehmer und Schäden an der Umwelt verringern.

Da insbesondere der Wechsel der jeweiligen Arbeitsgeräte automatisch und schnell erfolgt, ist dies auch eine Motivation für den jeweiligen Fahrzeugführer, das für den jeweiligen Arbeitseinsatz erforderliche Gerät zu verwenden. Dies führt wiederum zu einer Schonung der Arbeitsgeräte und Fahrzeuge und verringert Sachschäden und damit finanzielle Einbu-ßen. Bei einem häufigen Wechseln der jeweiligen anzubauenden Arbeitsgeräte lässt sich mit dem erfindungsgemäßen Kupplungssystem vorteilhaft Arbeitszeit einsparen.

Insbesondere bei bekannten händischen Kupplungsvorrichtungen ist es erforderlich für den jeweiligen Fahrzeugführer das hydraulische System Druck zu entlasten, aus dem Fahrzeug abzusteigen um die jeweiligen Leitungen zu trennen, wieder erneut auf das Fahrzeug aufzusteigen, um das jeweilige Arbeitsgerät vom Fahrzeug zu trennen, ein entsprechend neues Arbeitsgerät mit dem Fahrzeug aufzunehmen, erneut abzusteigen, um die jeweiligen Leitungen zu verbinden, um dann wieder aufzusteigen, um die Arbeit fortzusetzen.

Zusammengefasst lassen sich mit dem erfindungsgemäßen Kupplungssystem Unfälle verhüten, Umweltverschmutzungen vermeiden und Arbeitszeiten sparen. Dies gewährleistet höhere Einsatzzeiten der jeweiligen Fahrzeuge und Arbeitsgeräte und spart Arbeitszeit.

Vorzugsweise ist das Aufnahmeelement des Kupplungssystems als Ablageblock am Arbeitsgerät ausgebildet und umfasst wenigstens eine Ausnehmung zur Aufnahme des geräteseitigen Leitungsträgers.

Der Ablageblock kann beispielsweise einstückig am Arbeitsgerät ausgebildet sein oder nachträglich mit entsprechend geeigneten Befestigungsmitteln an diesem angebracht werden, beispielsweise verschraubt, verschweißt oder anders geeignet fixiert sein. Eine oder mehrere Ausnehmungen lassen sich mit fertigungstechnischen einfachen Mitteln bei der Herstellung des Ablageblocks darin einbringen, beispielsweise als Bohrung oder Ausfräsung. Die wenigstens eine Ausnehmung kann derart dimensioniert sein, dass sie entweder den Leitungsträger ganz oder teilweise aufnehmen kann oder aber ein entsprechend am Leitungsträger vorgesehenes Verbindungselement aufnehmen kann.

Der Ablageblock kann seitlich vom Arbeitsgerät vorstehen, und kann insbesondere an dessen Rückseite ausgebildet sein, da dies zumeist zur Kupplung des Arbeitsgeräts mit dem jeweiligen Fahrzeug vorgesehene Seite ist.

Vorzugsweise ist beim Kupplungssystem in oder am Arbeitsgerät wenigstens ein elastisches Element vorgesehen, um bei einem Lösen der Verbindung zwischen den Leitungsträgern den geräteseitigen Leitungsträger in seiner Lagerungsposition zu halten.

Das elastische Element kann beispielsweise als Elastomer oder als Federelement, beispielsweise eine Spiralfeder, vorgesehen sein. Diese ist derart am Arbeitsgerät angebracht, dass sie in der Lagerungsposition des geräteseitigen Leitungsträgers, diesen zum Gerät vorspannt. Bei einem Verbringen des geräteseitigen Leitungsträgers zur Verbindungsposition am Fahrzeug lässt sich dann das entsprechende elastische Element derart vorspannen, dass eine ausreichende Federkraft bzw. Energie bereitgestellt ist, um nach einem Lösen der Verbindung den geräteseitigen Leitungsträger entsprechend in seiner Lagerungsposition zu halten , nachdem ihn die Fördervorrichtung dorthin verbracht hat.

Vorzugsweise ist beim Kupplungssystem der geräteseitige Leitungsträger in seiner Verbindungsposition nur über die wenigstens eine Leitung und das elastische Element mit dem Arbeitsgerät verbunden.

Da der Leitungsträger bzw. die Kuppeleinheit, die bisher starr mit dem jeweiligen Arbeitsgerät verbunden war oder auf diesem abgelegt ist, vom Fahrzeug übernommen wird, ist die geräteseitige Kuppeleinheit bzw. der geräteseitige Leitungsträger nur noch über die Leitungen mit dem Arbeitsgerät verbunden. Somit lassen sich vorteilhaft mechanische Einwirkungen auf die Kuppelverbindung vermeiden.

Die wenigstens eine Leitung ist flexibel, so dass ein etwaig entstandenes Spiel keinen Einfluss auf diese hat. Vorteilhaft wirken keine mechanischen Kräfte auf die Leitungsträger und die damit dort vorgesehenen Leitungsverbindungen. Die Leitungsverbindungen sind durch übliche bekannte Steckverbindungen bereitgestellt. Daher ist der Verschleiß an den Kupplungseinheiten und den Verbindungen mit einem Verschleiß bei einem händischen Kupplungsvorgang gleichzusetzen und allenfalls gering.

Vorzugsweise steht beim Kupplungssystem der geräteseitige Leitungsträger zur Aufnahme in die Fördervorrichtung vom Arbeitsgerät ab.

Der geräteseitige Leitungsträger kann in entsprechend geeigneten Geometrien ausgestaltet sein. Insbesondere eine plattenförmige Ausgestaltung ermöglicht ein einfaches Einbringen der jeweiligen wenigstens einen Leitung. Insbesondere kann der Leitungsträger derart am Aufnahmeblock gelagert sein, dass er senkrecht bzw. lotrecht vom Arbeitsgerät absteht. Bevorzugt ist er an der dem Fahrzeug zugewandten Seite des Arbeitsgerätes angeordnet, da dies die bevorzugte Kupplungsposition ist.

Vorzugsweise umfasst beim Kupplungssystem der geräteseitige Leitungsträger wenigstens ein Führungselement zur Führung bei Verbindung des Leitungsträgers mit dem Aufnahmeelement oder dem fahrzeugseitigen Leitungsträger und das Aufnahmeelement und/oder der fahrzeugseitige Leitungsträger umfasst wenigstens eine korrespondierende Führungsaufnahme zur Aufnahme des wenigstens einen Führungselements.

Das Führungselement kann einstückig am Leitungsträger vorgesehen sein oder an diesen mit geeigneten Befestigungsmitteln befestigt sein, beispielsweise verschraubt, verschweißt oder anders befestigt. Das Führungselement kann jeweils Stift- oder bolzenförmig ausgestaltet sein und insbesondere an seinem dem Leitungsträger abgewandten Ende konisch zulaufend und/oder abgerundet ausgebildet sein. Das Führungselement entspricht dann einem bekannten Zentrierstift, der sich leicht in die mit ihren Innenabmessungen zu den Außenabmessungen des Zentrierstiftes korrespondierende Führungsaufnahme am Aufnahmeelement und/oder fahrzeugseitigen Leitungsträger bzw. der fahrzeugseitigen Kupplungseinheit einführen und verbinden lässt. Diese Maßnahme gewährleistet eine passgenaue Zusammenführung der jeweiligen Leitungsträger bzw. Kupplungseinheiten, so dass die daran vorgesehenen Steckverbindungen der jeweiligen Leitungen passgenau und reproduzierbar miteinander koppelbar bzw. verbindbar sind.

Vorzugsweise umfasst beim Kupplungssystem der fahrzeugseitige Leitungsträger und/oder das Aufnahmeelement wenigstens ein Führungselement zur Führung bei Verbindung mit dem geräteseitigen Leitungsträger und der geräteseitige Leitungsträger umfasst wenigstens eine korrespondierende Führungsaufnahme zur Aufnahme des wenigstens einen Führungselements.

Auch hier gilt das zuvor Gesagte, wonach bei Verwendung eines entsprechenden Zentrierstiftes als Führungselement eine wiederholgenaue Verbindung zwischen den jeweiligen Leitungsträgern bzw. Kuppeleinheiten möglich ist.

Vorzugsweise ist beim Kupplungssystem die Fördervorrichtung an dem Fahrzeug befestigt oder in einem mit dem Fahrzeug verbindbaren Rahmen, insbesondere einem Schnellwechselrahmen eingesetzt und montiert.

Die Fördervorrichtung kann mit geeigneten Befestigungsmitteln, beispielsweise an dem Fahrzeug oder einem Rahmen verschraubt oder verschweißt sein. Am Fahrzeug ist eine entsprechend geeignete Position auszuwählen. Der Rahmen, insbesondere Schnellwechselrahmen, kann mit dem Fahrzeug über beispielsweise einen Frontlader oder vergleichbare Zusatzgeräte befestigt und montiert sein.

Bei entsprechender Dimensionierung der Fördervorrichtung bzw. des Kupplungssystems bleiben sämtliche Normen für die Aufnahme des Arbeitsgeräts am Schnellwechselrahmen erhalten. Daher können bekannte Schnellwechselrahmen verwendet werden. Diese umfassen zumeist eine Gerüststruktur, in die sich das Kupplungssystem und insbesondere die Fördervorrichtung mit allenfalls geringen Modifikationen montieren, beispielsweise verschweißen oder verschrauben lassen.

Vorteilhaft lassen sich auch nach Montage der Fördervorrichtung am Schnellwechselrahmen diese für betriebsfremde Geräte ohne ein erfindungsgemäßes Kupplungssystem nutzen. Im Falle einer Verwendung betriebsfremder, hydraulischer Geräte ist dann lediglich ein Adapter erforderlich, um die Leitungen mit dem fahrzeugseitigen Leitungsträger zu verbinden. Vorteilhaft muss jedoch an der Aufnahme des Arbeitsgeräts und/oder dem geliehenen Arbeitsgerät selbst keine Veränderungen vorgenommen worden.

Vorzugsweise ist beim Kupplungssystem der fahrzeugseitige Leitungsträger fest mit dem Fahrzeug oder einem Befestigungsrahmen, insbesondere Schnellwechselrahmen, verbunden.

Der fahrzeugseitige Leitungsträger kann an geeigneter Position mit dem Fahrzeug oder dem Rahmen montiert, beispielsweise verschraubt, verschweißt oder anders geeignet befestigt sein. Insbesondere im Falle von bekannten Schnellwechselrahmen erfordert diese Befestigung nur allenfalls geringfügige Modifikationen am Schnellwechselrahmen.

Vorzugsweise ist am Fahrzeug und/oder Rahmen beim Kupplungssystem eine Schutzabdeckung für die Fördervorrichtung und/oder den fahrzeugseitigen Leitungsträger vorgesehen.

Die Schutzabdeckung kann insbesondere in einer einfachen Ausführung als dachartige Platte vorgesehen sein. Bei entsprechender Dimensionierung und Montage oberhalb der Fördervorrichtung bzw. des Leitungsträgers, lassen sich so Verschmutzungen von oben beispielsweise beim Transport von Heu, Schnee, Mist, oder sonstigen verhindern.

Vorzugsweise umfasst beim Kupplungssystem der fahrzeugseitige Leitungsträger eine verschwenkbare Schutzabdeckung, die insbesondere ein Führungselement umfasst, das ausgelegt ist, um beim Verbinden des geräteseitigen Leitungsträgers mit dem fahrzeugseitigen Leitungsträger während des Kopplungsvorgangs mit dem wenigstens einem Führungselement derart zusammenzuwirken, dass die Schutzdeckung verschwenkt und den fahrzeugseitigen Leitungsträger zur Verbindung mit dem geräteseitigen Leitungsträger freigibt.

Die Schutzabdeckung kann in entsprechend geeigneten Geometrien vorgesehen sein. Insbesondere eine plattenförmige Ausgestaltung mit zum fahrzeugseitigen Leitungsträger komplementären Abmessungen ermöglicht eine vollständige Abdeckung von der der Transportvorrichtung zugewandter Seite des fahrzeugseitigen Leitungsträgers.

Das Führungselement kann insbesondere leistenförmig ausgebildet sein und von der Schutzabdeckung mehr oder weniger lotrecht abstehen. Die Führungsleiste kann an ihrer von der Schutzabdeckung abgewandten Seite speziell geformt sein, etwa leicht umgebogen, um ein einfaches Angreifen des konisch zulaufenden Endes des Zentrierstiftes zu ermöglichen.

Beim Einschwenken des geräteseitigen Leitungsträgers in die Fördervorrichtung greifen dann die Führungselemente bzw. das der Fördervorrichtung zugewandte Führungselement bzw. der Zentrierstift mit seinem vorderen Ende an der Führungsleiste an, so dass die Schutzabdeckung seitlich in Richtung des Fahrzeugs verschwenkt wird und die Vorderseite des fahrzeugseitigen Leitungsträger zur Kopplung mit dem geräteseitigen Leitungsträger freigibt. Das Führungselement kann einstückig mit der Schutzabdeckung ausgebildet sein oder geeignet an dieser befestigt, bspw. verschweißt.

In einer einfachen Ausgestaltung ist die Schutzabdeckung über einen Bolzen oder Stift einseitig am fahrzeugseitigen Leitungsträger montiert und um diesen Bolzen oder Stift als Schwenkachse verschwenkbar. Beim Entkoppeln des fahrzeugseitigen und geräteseitigen Leitungsträgers verschwenkt die Schutzabdeckung wieder in ihre Ausgangsposition. Diese Rückführung kann entweder durch das Eigengewicht der Schutzabdeckung erfolgen oder aber ist es möglich, ein separates elastisches Element, beispielsweise eine entsprechend geeignete Rückholfeder vorzusehen. Im letzteren Fall wird dann bei Verbindung der Leitungsträger die Schutzabdeckung gegen die Federkraft bzw. Kraft des elastischen Elements verschwenkt, so dass das elastische Element bzw. die Rückholfeder die Schutzabdeckung beim Entkoppeln der beiden Leitungsträger wieder in ihre Ausgangsposition verschwenkt.

Sofern am Arbeitswerkzeug keine Leitungen vorgesehen sind und somit auch kein geräteseitiger Leitungsträger werden das Werkzeug und Fahrzeug in zuvor beschriebener Art und Weise miteinander verbunden, wobei jedoch die Schutzabdeckung vor dem Kupplungsblock verbleibt und diesen vor Verschmutzungen schützt.

Vorzugsweise umfasst beim Kupplungssystem die Fördervorrichtung eine Aufnahme für den geräteseitigen Leitungsträger und dessen Lagerung.

Mit fertigungstechnisch einfachen Mitteln lassen sich beispielsweise plattenförmige Führungselemente oder Führungsleisten der Fördervorrichtung vorsehen, die insbesondere an ihren dem geräteseitigen Leitungsträger zugewandten Seite Abschrägungen bzw. Abrundungen aufweisen können, um eine Aufnahme und ein Einführen des Leitungsträgers in der Aufnahme zu erleichtern.

Vorzugsweise umfasst die Fördervorrichtung wenigstens ein Sicherungselement, das angeordnet und ausgelegt ist, um ein Einführen des geräteseitigen Leitungsträgers in die Aufnahme nur in einer definierten Position zu ermöglichen.

Das Sicherungselement kann in einer einfachen Ausgestaltung als plattenförmiges Element auf einer oder beiden Seiten der Aufnahme in der Fördervorrichtung vorgesehen sein. Auch ist eine Ausgestaltung als Block oder als Sicherungsleiste möglich. Bei entsprechender Dimensionierung verhindert das Sicherungselement eine Aufnahme des plattenförmigen, geräteseitigen Leitungsträgers in die Fördervorrichtung außerhalb der dafür vorgesehen Aufnahme. Somit lassen sich eine fehlerhafte Bedienung bzw. Montage und Unfälle oder Beschädigungen vermeiden.

Sofern der geräteseitige Leitungsträger außerhalb der richtigen Einbaulage gegenüber der Aufnahme an der Fördervorrichtung liegt, steht der geräteseitige Leitungsträger am Sicherungselement auf, so dass insgesamt das Arbeitsgerät vom Fahrzeug beabstandet ist, beispielsweise 15 Zentimeter entfernt ist, so dass dies auch vom Fahrzeugführer wahrnehmbar ist. Bekannte Arbeitsgeräte lassen sich bei geschlossener Verriegelung aufnehmen, wobei dies kaum erkennbar ist, da das Arbeitsgerät ca. 2 Zentimeter vom Fahrzeug bzw. Schnellwechselrahmen entfernt ist. Bleibt dies vom Fahrer unbemerkt ergibt sich ein sehr großes Gefahrenpotential, da mit unverriegeltem Arbeitsgerät gearbeitet wird. Es kann beim Arbeiten passieren, dass sich das Arbeitsgerät vom Fahrzeug löst und Personen oder Sachschaden verursacht.

Durch die Sicherung wird dies verhindert. In einem solchen Fall bleibt das Gerät auf der Unterseite mindestens zwölf bis fünfzehn Zentimeter, was optisch leicht wahrzunehmen ist, vom Schnellwechselrahmen entfernt. Dies trägt ebenfalls zur Vermeidung von schweren Unfällen und finanziellen Schäden bei. Ein solches Sicherungselement ist auch bei Arbeitsgeräten ohne hydraulische, pneumatische oder elektrische Anschlüsse mit einfachen Mitteln und kostengünstig zu realisieren.

Ein Schlitten lässt sich mit fertigungstechnischen Mitteln einfach bereitstellen. In einer einfachen Ausgestaltung kann der Außenrahmen beispielsweise U-förmig ausgestaltet sein, der Schlitten kann dann L- oder U-förmig ausgestaltet und im Außenrahmen verschiebbar gelagert sein.

Vorzugsweise umfasst beim Kupplungssystem der Außenrahmen wenigstens ein Führungselement zur Führung des Schlittens.

Das Führungselement kann beispielsweise als Führungsleiste oder -kante, an der Außenseite des Außenrahmens vorgesehen sein. Die Führung stellt eine Verschiebbarkeit des Schlittens sicher und verhindert dessen Herausfallen aus dem Außenrahmen.

Vorzugsweise ist beim Kupplungssystem die Fördervorrichtung zur Förderung des geräteseitigen Leitungsträgerelements pneumatisch oder elektrisch oder hydraulisch angetrieben, und umfasst insbesondere einen mit ihr gekoppelten Zylinder.

Beispielsweise lässt sich die Fördervorrichtung über einen Elektromotor betreiben. In einer einfachen Ausgestaltung kann auch eine pneumatisch oder hydraulisch angetriebene Zylindervorrichtung vorgesehen sein, derart, dass die Fördervorrichtung den geräteseitigen Leitungsträger aus seiner Lagerungsposition in seine Verbindungsposition verbringt und dort hält und beim Lösen der Verbindung zurückführt. Auch lässt sich ein hydraulischer oder pneumatischer Verriegelungszylinder verwenden, der insbesondere aus Euroschnellwechselrahmen zur Verriegelung des Fahrzeugs bzw. des Schnellwechselrahmens in einer entsprechenden am Arbeitsgerät vorgesehenen und bekannten Verriegelungsöse bekannt ist. Somit lässt sich vorteilhaft ein bekannter Verriegelungszylinder mit einer Zusatzfunktion belegen.

Vorzugsweise ist beim Kupplungssystem eine Sicherungs- bzw. Verriegelungsvorrichtung vorgesehen, die die beiden Leitungsträger in deren Verbindungsposition zusätzlich gegeneinander verriegelt.

Insbesondere bei einer selbstsichernden Ausgestaltung der Sicherungsvorrichtung lässt sich so ein unbeabsichtigtes Trennen der Leitungsträger und damit der Leitungen verhindern.

Die Sicherungsvorrichtung kann derart ausgelegt sein, dass sie ein Verbinden bzw. Kuppeln der Leitungen nur ermöglicht, wenn das Arbeitsgerät am Fahrzeug korrekt bzw. richtig sitzt und eingerastet ist, da sich nur dann der Verriegelungszylinder mit den Ösen am Arbeitsgerät verriegeln lässt. Vorteilhaft gewährleistet diese Maßnahme auch, dass das hydraulische und/oder elektrische Arbeitsgerät vom Fahrzeug im verriegelten Zustand nicht getrennt werden kann, solange die Leitungen miteinander verbunden sind. Bevorzugt ist die Sicherungseinrichtung derart ausgelegt, dass sie den Verschubschlitten inklusive des geräteseitigen Leitungsträgers gegen den fahrzeugseitigen Leitungsträger bzw. Kuppelblock presst und in dieser Position fixiert. Dabei ergibt sich eine feste Verbindung, die sich selbst bei Nachlassen der Fahrzeughydraulik nicht selbständig öffnen kann.

Bevorzugt umfasst beim Kupplungssystem die Sicherungsvorrichtung eine Zwangssteuerung, um ein bewegbares Verriegelungselement in seiner Verriegelungsposition und seine Freigabeposition zu verbringen.

Diese Maßnahme verhindert ein selbsttätiges Öffnen der Sicherung und damit ein unbeabsichtigtes Trennen der Leitungen.

Vorzugsweise ist beim Kupplungssystem entweder am Fahrzeug oder am Rahmen bzw. Schnellwechselrahmen ein Verbindungselement zu dessen Kopplung mit einem komplementären Verbindungselement am Arbeitsgerät vorgesehen.

Das fahrzeugseitige Verbindungselement kann in einer einfachen Ausgestaltung zapfenförmig, stangenförmig oder rohrartig ausgebildet sein, das horizontal am Fahrzeug oder am entsprechenden Rahmen vorgesehen ist. Das geräteseitige Verbindungselement kann dabei schlaufenförmig oder halbrund und komplementär zum jeweiligen Zapfen bzw. Rohr- oder Stangenabschnitt am Fahrzeug bzw. Rahmen ausgestaltet sein. Zum Verbinden der Verbindungselemente untergreift der rohr-, zapfen- oder stangenartige Abschnitt jeweils die beidseitig am Arbeitsgerät vorgesehenen Laschen oder Schlaufen und kann so das Arbeitsgerät nach oben anheben.

Zusammengefasst, stellt die Erfindung ein vollautomatisches Kupplungssystem für hydraulische oder pneumatische und/oder elektrische Leitungen bereit, das selbstsichernd ausgebildet ist und an gängigen Arbeitsgeräten und Fahrzeugen mit einfachen Mitteln montierbar ist. Insbesondere toleriert das erfindungsgemäße Kupplungssystem Spielerweiterungen durch ständigen Gebrauch in hohem Maße.

Ausführungsbeispiele der Erfindung sind im Folgenden unter Bezugnahme auf die beigefügten, schematischen Zeichnungen näher erläutert. Im Einzelnen zeigen:
- Fig. 1a: eine perspektivische Teilansicht des erfindungsgemäßen geräteseitigen Leitungsträgers von der Seite hinten oben;
- Fig. 1b: den Leitungsträger aus Fig. 1b in einer perspektivischen Teilansicht schräg von vorne;
- Fig. 2: eine perspektivische Teilansicht eines Arbeitsgeräts mit daran angeordnetem Leitungsträger schräg von hinten rechts;
- Fig. 3: eine Längsschnittdarstellung des Leitungsträgers aus Fig. 1a und b;
- Fig. 4: eine Längsschnittdarstellung des Leitungsträgers mit einer alternativen Befestigung seiner Zentrierstifte;
- Fig. 5: eine Teilschnittdarstellung des Arbeitsgerätes mit daran montiertem Ablageblock;
- Fig. 6: eine Draufsicht der Teildarstellung des Arbeitsgeräts aus Fig. 2;
- Fig. 7: eine perspektivische Teilansicht der erfindungsgemäßen Transportvorrichtung mit einer daran angeordneten Verriegelungsvorrichtung in einer Ansicht schräg von hinten;
- Fig. 8: eine perspektivische Teilansicht der erfindungsgemäßen Transportvorrichtung aus Fig. 7 mit daran angeordnetem Verschubschlitten von vorne;
- Fig. 9: die Transportvorrichtung aus Fig. 8 mit dem in den Verschubschlitten eingesetzten geräteseitigen Leitungsträger und werkzeugseitigen Leitungsträger;
- Fig. 10: eine perspektivische Teilansicht der Transportvorrichtung aus Fig. 9 schräg von vorne;
- Fig. 11: eine Draufsicht auf einen bekannten Schnellwechselrahmen;
- Fig. 12: einen Längsschnitt durch den Schnellwechselrahmen aus Fig. 11 mit daran angeordnetem fahrzeugseitigem Leitungsträger;
- Fig. 13: eine Längsquerschnittdarstellung durch den Kupplungsblock aus Fig. 12;
- Fig. 14: eine perspektivische Teilansicht des Schnellwechselrahmen und des erfindungsgemäßen Kupplungssystems bei Kopplung mit einem Arbeitsgerät;
- Fig. 15: der Schnellwechselrahmen und das Kupplungssystem aus Fig. 14 im gekoppelten Zustand;
- Fig. 16: eine Teilschnittdarstellung des Schnellwechselrahmens und des erfindungsgemäßen Kupplungssystems geöffnet vor Verbindung;
- Fig. 17: eine Teilschnittdarstellung des Schnellwechselrahmens und Arbeitsgerät sowie erfindungsgemäßem Kupplungssystem im geschlossenen Zustand;
- Fig. 18: eine Teilansicht des Schnellwechselrahmen mit daran angeordnetem Kupplungssystem und dessen Verriegelungsvorrichtung im geöffneten Zustand von hinten;
- Fig. 19: eine Teilansicht der Rückseite des Außenrahmens der Fördervorrichtung von hinten;
- Fig. 20: eine Längsteilschnittansicht der Verriegelungsvorrichtung aus Fig. 18;
- Fig. 21: eine Teilansicht der im Schnellwechselrahmen angeordneten Fördervorrichtung aus Fig. 18 im geöffneten Zustand und mit eingesetztem geräteseitigem Leitungsträger von vorne;
- Fig. 22: eine Teilquerschnittsansicht durch das automatische Kupplungssystem von oben mit eingesetztem geräteseitigem Leitungsträger, wobei sich die Verriegelungsvorrichtung in ihrer Mittelposition befindet;
- Fig. 23a: eine schematische Darstellung der Verriegelungsvorrichtung im geöffneten Zustand;
- Fig. 23b: die Verriegelungsvorrichtung aus Fig. 23a in ihrer mittleren Position;
- Fig. 23c: die Verriegelungsvorrichtung aus Fig. 23a in ihrer geschlossenen Position;
- Fig. 24: das automatische Kupplungssystem aus Fig. 18 im verriegelten Zustand;
- Fig. 25: das automatische Kupplungssystem aus Fig. 21 im verriegelten Zustand mit eingesetztem geräteseitigem Leitungsträger;
- Fig. 26a: eine schematische Darstellung der Verriegelungsvorrichtung in einer Ansicht von hinten im geöffneten Zustand;
- Fig. 26b: die Verriegelungsvorrichtung aus Fig. 26a in ihrer mittleren Position;
- Fig. 26c: die Verriegelungsvorrichtung aus Fig. 26b im verriegelten Zustand,
- Fig. 27: eine alternative Ausgestaltung der Transportvorrichtung aus Fig. 9 mit dem im Verschubschlitten eingesetzten geräteseitigen, wobei eine Schutzabdeckung am Kupplungsblock vorgesehen ist;
- Fig. 28: eine perspektivische Teilansicht der Transportvorrichtung aus Fig. 10 mit einer geschlossenen Schutzabdeckung am Kupplungsblock;
- Fig. 29a: eine schematische Darstellung des Kupplungsblock mit geschlossener Schutzabdeckung;
- Fig. 29b: den Kupplungsblock aus Fig. 29a mit teilweise geöffneter Schutzabdeckung; und
- Fig. 29c: den Kupplungsblock 29b mit weiter geöffneter Schutzabdeckung.

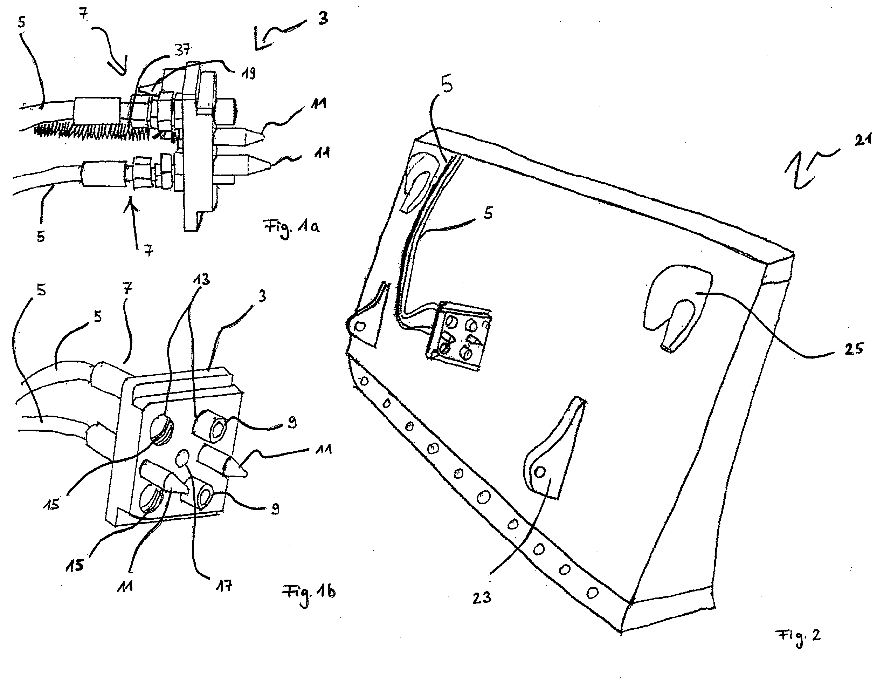

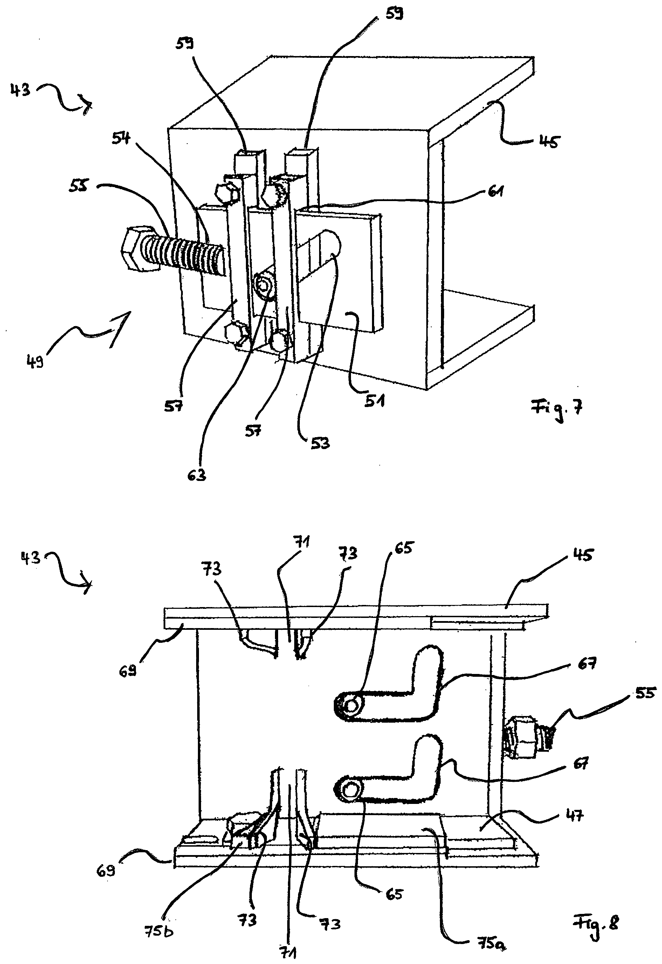

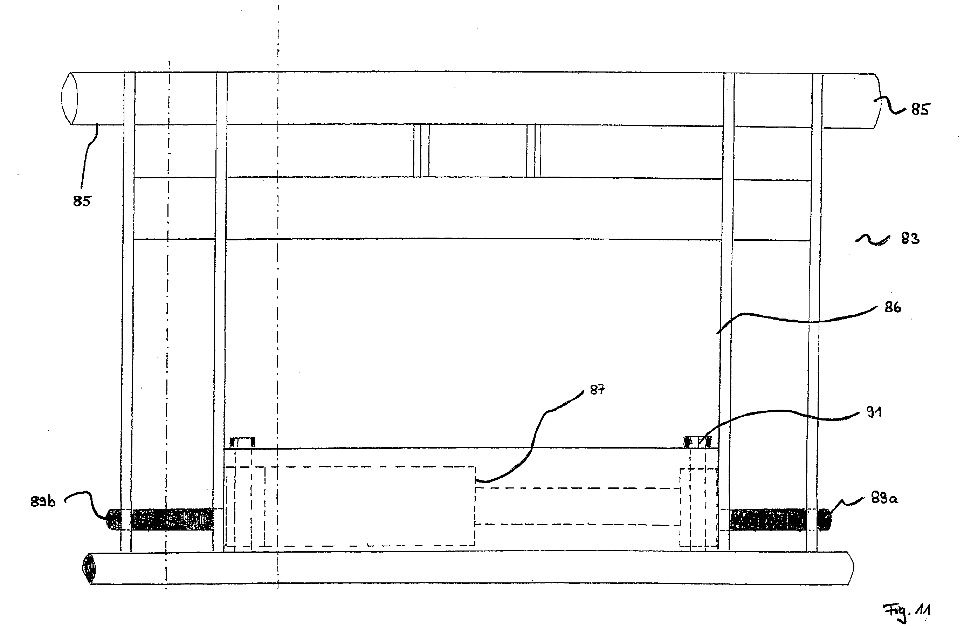

Fig. 1 bis 6 erläutern den Aufbau eines geräteseitigen Leitungsträgers bzw. Kupplungseinheit 3 und dessen Lagerung am Arbeitsgerät 21. Fig. 7 bis 10 erläutern den Aufbau der Fördervorrichtung. Fig. 11 bis 26c erläutern den Aufbau und das Zusammenwirken des automatischen Kupplungssystems und insbesondere dessen Verriegelungsvorrichtung.

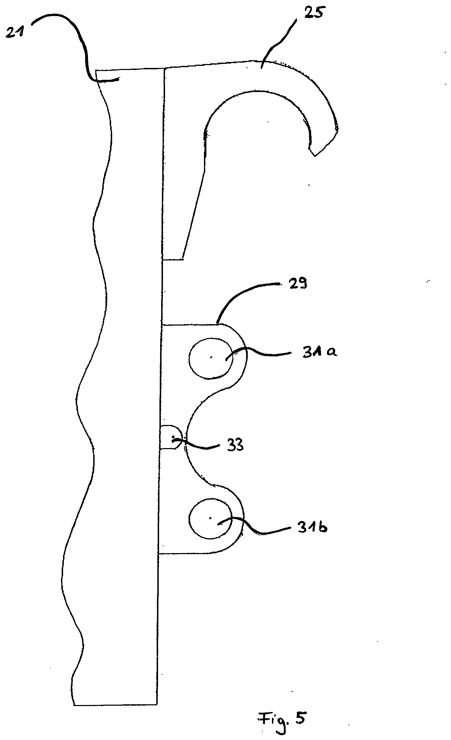

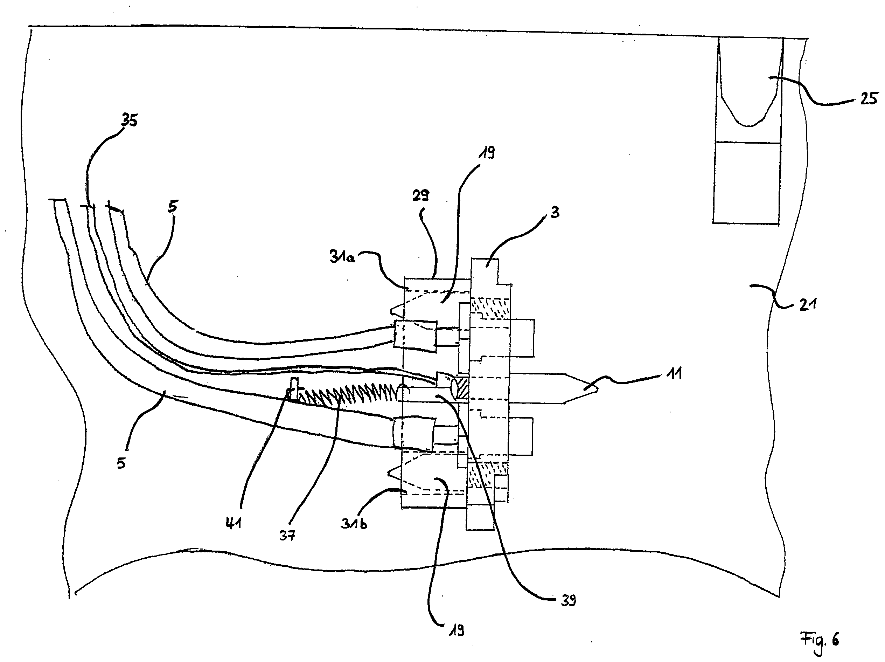

Fig. 1a und 1b zeigen den geräteseitigen plattenförmigen Leitungsträger 3. In Fig. 2 ist der geräteseitige Leitungsträger 3 an der Rückseite eines teilweise dargestellten Arbeitsgeräts 21 in einem Aufnahmeblock 29 (vgl. Fig. 5 und 6) gelagert. Der plattenförmige Leitungsträger 3 ist an seiner Oberseite und Unterseite gestuft und in etwa quadratisch ausgebildet. Vier Ausnehmungen 13 sind im Leitungsträger 3 zur Aufnahme von hydraulischen Leitungen 5 an deren Anschlussenden 7 vorgesehen. Beispielsweise können zu deren Befestigung Innengewinde 15 in den Ausnehmungen 13 vorgesehen sein. Alternativ können alle anderen gängigen Kupplungen für die Befestigung der Anschlussenden im Leitungsträger bzw. der Kuppeleinheit Verwendung finden.

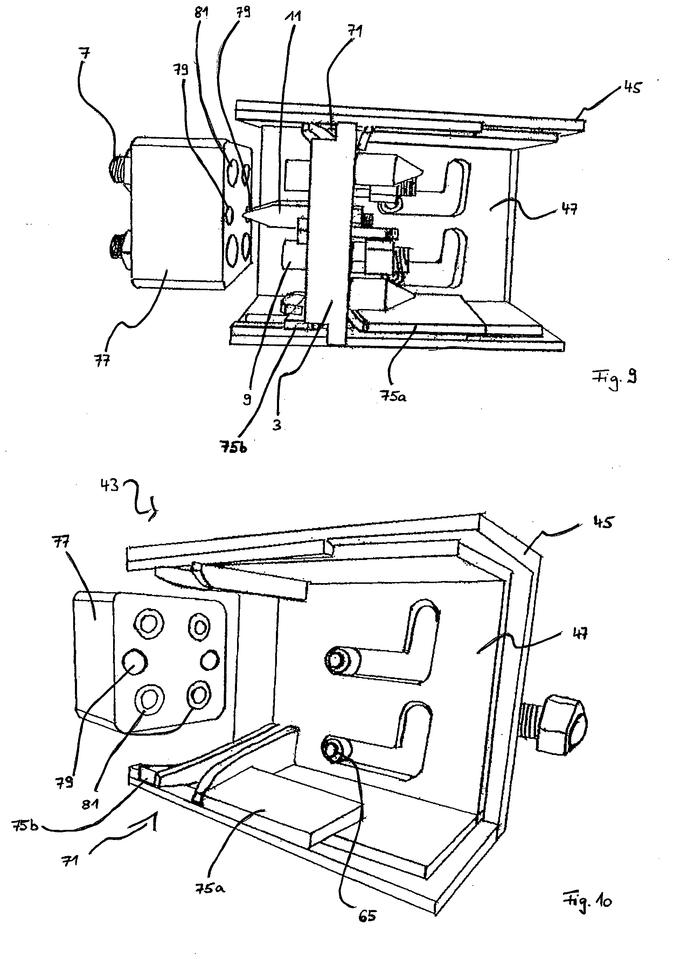

Etwa im Zentrum des Leitungsträgers 3 ist eine Ausnehmung 17 zur Aufnahme einer elektrischen beispielsweise mehrpoligen Leitung vorgesehen. Die hydraulischen Leitungen 5 durchdringen den Leitungsträger 3 vollständig und bilden so mit ihrem Ende eine Steckverbindung 9 aus. Ferner sind Zentrierstifte 11 zur Verbindung des Leitungsträgers 3 mit einem fahrzeugseitigen Leitungsträger 77 vorgesehen (vgl. Fig. 9 ff.).

Zusätzlich zeigt Fig. 1a eine Rückhaltefeder 37, die entweder direkt mit dem Leitungsträger 3 oder über einen Verbindungsbolzen gekoppelt sein kann. Diese dient dazu, den Leitungsträger 3 im nicht verbundenen Zustand in seiner in Fig. 2 gezeigte Lagerungsposition zurückzuführen. In der Lagerungsposition steht der Leitungsträger 3 bzw. die Kupplungseinheit 3 in etwa lotrecht von der Rückseite des Arbeitsgeräts 21 ab. Die in Fig. 2 nur schematisch gezeigten Leitungen 5 setzen sich über das Arbeitsgerät 21 fort und dienen zum Anschluss an entsprechende Werkzeuge, beispielsweise Greifern. Im unteren Bereich der Rückseite des Arbeitsgeräts 21 sind zwei Verriegelungsösen 23 vorgesehen, die in etwa Lotrecht von der Rückseite vorstehen. An der Oberseite sind zusätzlich zwei schlaufenförmige Aufhängungen 25 vorgesehen, die der Aufnahme von korrespondierenden Kupplungszapfen eines Schnellwechselrahmens 83 (vgl. Fig. 11 bis 15) vorgesehen sind.

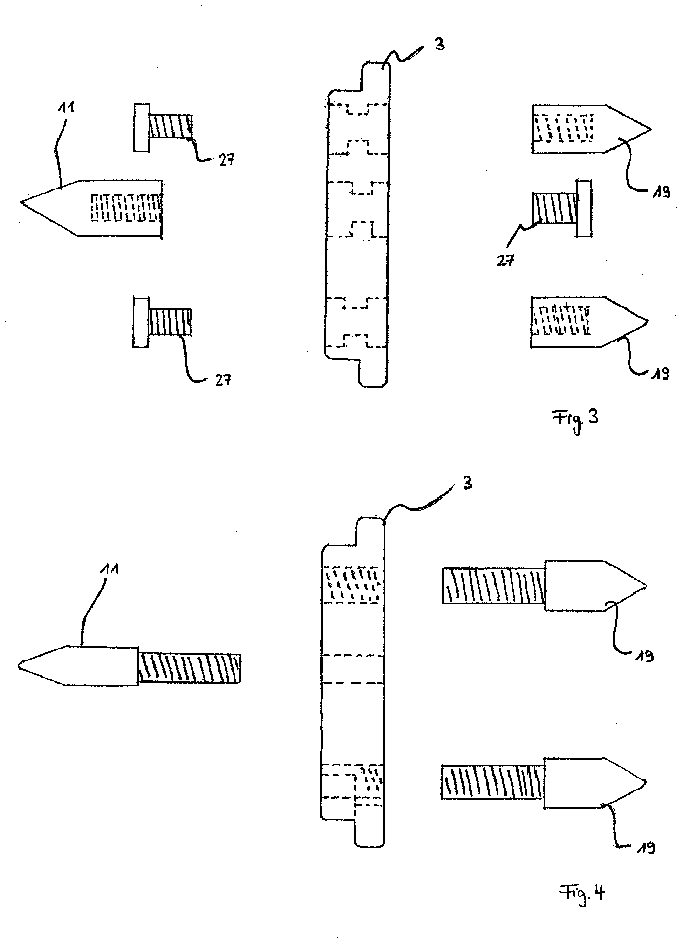

Fig. 3 und 4 zeigen zwei alternative Ausführungsformen zur Befestigung der Zentrierzapfen 19 und 11 am Leitungsträger 3. In Fig. 3 umfasst der Leitungsträger 3 ihn durchdringende Ausnehmungen, die sich mittig verjüngen und auf der einen Seite dem Einsatz von Zentrierstiftaufsätzen 11 bzw. 19 dienen. Zusätzlich sind Aufnahme für die Befestigung von Schrauben 27 und deren Köpfe vorgesehen.

In Fig. 4 umfassen die Zentrierstifte 11 und 19 an ihrer Unterseite jeweils Gewindeabschnitte, die mit entsprechenden Gegengewindeabschnitten mit Ausnehmungen im Leitungsträger 3 in Eingriff gehen.

Fig. 5 zeigt eine Seitenansicht eines Teils des Arbeitsgeräts 21 mit seiner Aufhängung 25 und dem Ablageblock 29. Im Ablageblock sind zwei Ausnehmungen 31a, 31b vorgesehen, die zur Aufnahme der Zentrierstifte 19 des Leitungsträgers 3 dienen. Zusätzlich ist noch eine Befestigungsmöglichkeit 33 für die Rückhaltefeder 37 vorgesehen.

Fig. 6 zeigt die Lagerungsposition des Leitungsträgers 3 am Ablageblock 29, wobei die Zentrierstifte 19 den Ablageblock 29 in den entsprechenden Führungsaufnahmen 31a, b durchdringen. Die Rückhaltefeder 37 ist mit einem Befestigungszapfen 39 gekoppelt, der wiederum den Leitungsträger 3 durchdringt und dort befestigt ist. An ihrem zweiten Ende umfasst die Rückhaltefeder 37 eine Befestigungsöse 41 an der Rückseite des Arbeitsgeräts 21. Neben den beiden hydraulischen Leitungen 5 ist zusätzlich noch eine mehrpolige Elektroleitung 35 vorgesehen, die in der Ausnehmung 17 (vgl. Fig. 1b des Leitungsträgers 3 aufgenommen ist.

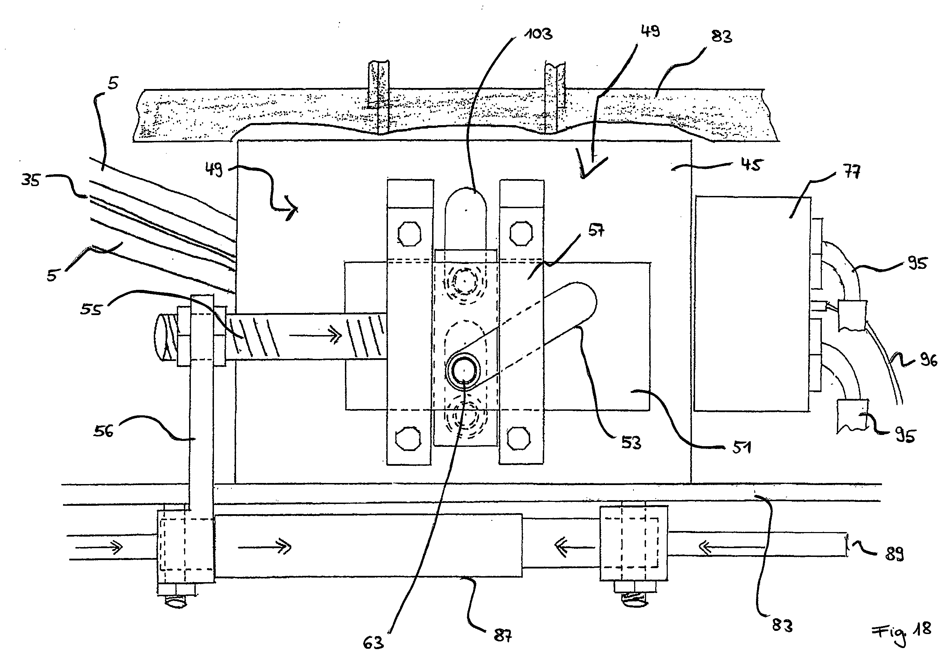

Fig. 7 und 8 zeigen eine Transportvorrichtung 43 in einer Ansicht von hinten und von vorne. Die Transportvorrichtung 43 umfasst einen in etwa U-förmigen Außenrahmen 45, dessen offene Seite sich zum Arbeitsgerät 21 erstreckt. An der Rückseite des Außenrahmens 45 ist eine Verriegelungs- bzw. Sicherungsvorrichtung 49 vorgesehen, deren Aufbau hier teilweise erläutert wird und deren Funktionsweise bei Erläuterung der Fig. 18 bis 26c näher dargestellt ist.

Die Verriegelungsvorrichtung 49 umfasst ein plattenförmiges Bedienelement 51, das von einem diagonal verlaufenden Langloch 53, das wiederum als Steuerkulisse dient, durchsetzt ist. An seiner linken Seite umfasst die Platte 51 eine Ausnehmung 54 zum Einsatz eines Verbindungselements 55 zur Verbindung mit einem hier nicht gezeigten Bewegungsmedium, beispielsweise einem Hydraulikzylinder (vgl. Fig. 18 bis 26c). Die Platte 51 ist horizontal verschiebbar gelagert, wozu auf der Rückseite des Außenrahmens 45 parallel zueinander angeordnete Führungsleisten 59 vertikal aufgesetzt sind, die wiederum mit bügelartigen Führungselementen 57 gekoppelt sind. Die Führungsbügel 57 bilden in ihrem Innern eine Aufnahme 61, in der die Platte 51 beweglich geführt ist. Zusätzlich ist ein Führungszapfen 63 vorgesehen, der in der Steuerkulisse 53 geführt ist.

Fig. 8 zeigt einen in den Außenrahmen 51 eingesetzten Verschubschlitten 47. Der Außenrahmen 45 umfasst hierzu an seinen Vorderseiten jeweils Führungsleisten 69, die ein Herausfallen des Verschubschlittens 47 verhindern. Alternativ lassen sich zur Befestigung des Verschubschlittens alle gängigen Befestigungsmittel verwenden. Der Verschubschlitten 47 ist innerhalb des Außenrahmens 45 horizontal beweglich angeordnet. An seiner Rückseite umfasst der Verschubschlitten 47 zwei parallel zueinander übereinander angeordnete L-förmige Langlöcher 67, die jeweils eine Steuerkulisse für darin angeordnete Sicherungsstifte 65 bilden. Deren Funktionsweise wird mit Hinblick auf die Fig. 18 bis 26c erläutert.

Zusätzlich ist an der Oberseite und Unterseite des etwa U-förmigen Verschubschlittens eine Aufnahme 71 über leistenförmige Führungselemente 73 vorgesehen. Darin lässt sich im gekoppelten bzw. verbundenen Zustand der Leitungsträger 3 aus Fig. 1 bis 6 einsetzen (vgl. Fig. 9). Die vorderen Enden der Führungsleisten 73 sind abgerundet und leicht nach außen geöffnet, um in der Aufnahme des senkrecht vom Arbeitsgerät abstehenden Leitungsträgers 3 zu erleichtern.

Neben den Führungsleisten 73 sind beidseitig Sicherungsplatten 75a und 75b vorgesehen, die verhindern, dass der Leitungsträger 3 falsch eingesetzt wird. Steht der Leitungsträger 3 an einer der Sicherungsplatten 75a, 75b an, lässt sich der Leitungsträger nicht in die Aufnahme 71 einführen. Bei Anordnung des Kupplungssystems in einem Schnellwechselrahmen (vgl. Fig. 11 ff.) lässt sich dann der Schnellwechselrahmen nicht am Arbeitsgerät verriegeln und ist deutlich beabstandet. Somit realisiert der Fahrer eines Fahrzeuges entsprechende Fehlstellung.

Fig. 9 zeigt den Leitungsträger 3, der in die Aufnahme 71 eingesetzt ist und Fig. 10 zeigt eine perspektivische Teilansicht der Transportvorrichtung aus Fig. 9 ohne geräteseitigen Leitungsträger. Zusätzlich ist ein fahrzeugseitiger Leitungsträger 77 in Form eines Kupplungsblocks gezeigt, der in seinem Inneren vier ihn durchdringende Ausnehmungen für hydraulische Leitungen 5 umfasst, die von der linken Seite aus über ihre Anschlussstücke 7 in den fahrzeugseitigen Leitungsträger bzw. Kupplungsblock 77 einsetzbar sind. Die Aufnahmen 81 im Führungsblock 77 sind zur Aufnahme der Steckanschlüsse 9 der hydraulischen Leitungen 5 vorgesehen. Zusätzlich sind parallel zueinander in etwa mittig zwei Führungsaufnahmen 79 für die Zentrierstifte 11 des Leitungsträgers 3 vorgesehen.

Der fahrzeugseitige Leitungsträger 77 kann ebenso wie die Fördervorrichtung 43 und deren Außenrahmen 45 mit einem entsprechenden Schnellwechselrahmen 83 oder aber auch direkt mit dem Fahrzeug fest verbunden, beispielsweise verschraubt und/oder verschweißt sein.

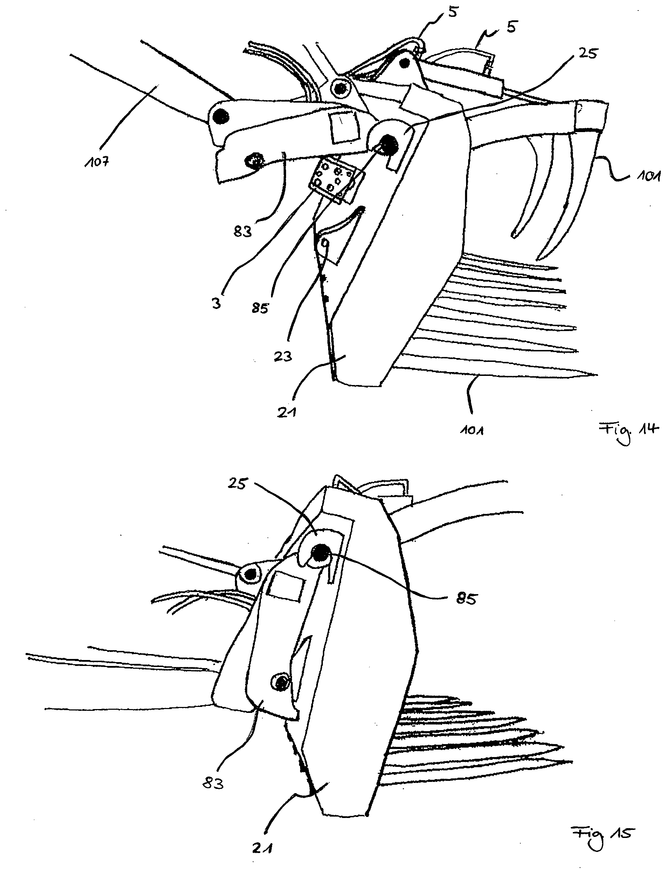

Fig. 11 zeigt eine Draufsicht auf einen bekannten Euroschnellwechselrahmen 83. Der Schnellwechselrahmen 83 umfasst an seiner Oberseite einen rohr- oder zapfenartigen Abschnitt mit jeweiligen Zapfenenden 85, die zum Eingriff in die Aufhängungen 25 am Arbeitsgerät 21 vorgesehen sind. Zur Funktionsweise vgl. Fig. 14 und 15. Der Schnellwechselrahmen 83 umfasst eine in etwa gerüstartige Struktur. In seinem mittleren, unteren Bereich ist eine in etwa rechteckige Ausnehmung vorgesehen, an deren Unterseite ein Hydraulikzylinder 87 angeordnet ist. Solche Hydraulikzylinder 87 sind bekannt und haben die Aufgabe, über Verriegelungszapfen 89a und 89a den Schnellwechselrahmen 83 an einem Arbeitsgerät 21 in den entsprechenden Verriegelungsösen 23 des Arbeitsgeräts 21 (vgl. Fig. 2) zu verriegeln. Dazu lassen sich die Verriegelungszapfen 89a und b einfahren und entsprechend wenn die Verriegelungsösen 23 den Schnellwechselrahmen 83 durchdringen, wieder ausfahren, um mit den korrespondierenden Verriegelungsösen 23 in Eingriff zu gehen.

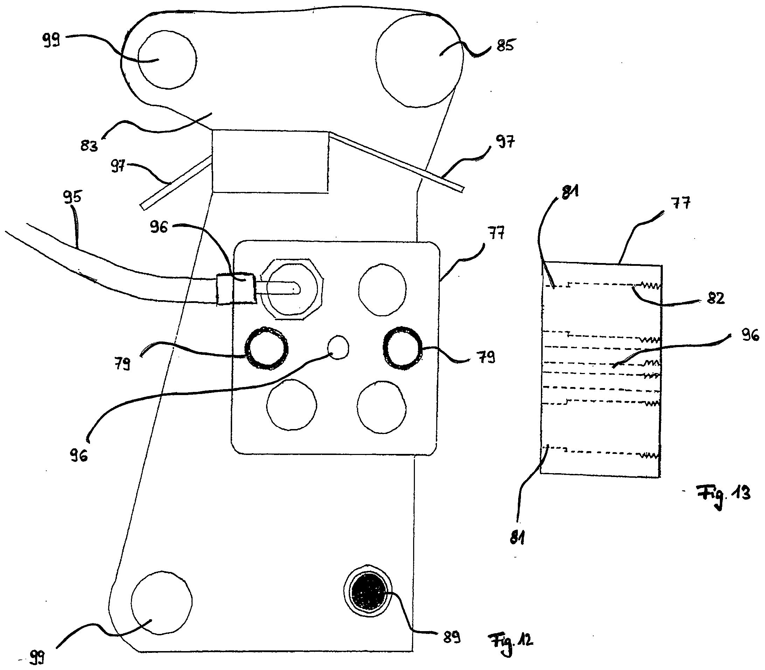

Fig. 12 zeigt eine Teilschnittdarstellung des Schnellwechselrahmens 83 mit daran montiertem fahrzeugseitigem Leitungsträger bzw. Kupplungsblock 77. Der Kupplungsblock kann beispielsweise verschweißt oder mit dem Schnellwechselrahmen verschraubt sein. An der Vorderseite des Schnellwechselrahmens 83 sind der Zapfen 85 und der Verriegelungszapfen 89 vorgesehen. Oberhalb des Kupplungsblockes 77 sind schräg verlaufende dachförmig Schutzabdeckungen 97 vorgesehen, die den Kupplungsblock 77 vor Verschmutzungen durch im Betrieb von oben herab fallenden Unrat, Müll und sonstigem schützen. An der Rückseite des Schnellwechselrahmens 83 sind entsprechende Befestigungsösen 99 vorgesehen, die der Verbindung mit einem Träger am Fahrzeug etwa den Ladearmen eines Traktors oder ähnlichem oder direkt am Fahrzeug, am Rahmen eines LKWs mit Wechselaufbau, nahezu überall wo Leitungen zu verbinden und zu trennen sind, vorgesehen sind. Üblicherweise werden Schnellwechselrahmen 83 einmal montiert und dann am Fahrzeug im montierten Zustand gelassen.

Fig. 13 zeigt eine Längsschnittdarstellung des fahrzeugseitigen Leitungsträgers 77 bzw. Kupplungsblock. Die fahrzeugseitigen Hydraulikleitungen 95 verfügen über handelsübliche Anschlüsse die in entsprechende Hydraulikleitungsaufnahmen 82 im Kupplungsblock 77 einsetzbar und dort mit ihrem Kuppelanschluss am Endabschnitt, beispielsweise über eine Gewindeverbindung befestigbar sind. Die Leitungsaufnahmen verjüngen sich an ihrem den Leitungen 95 gegenüber liegendem Ende zu einer Aufnahme 81 für die Steckanschlüsse der Hydraulikleitungen 5 des Arbeitsgeräts 21. Auch diese Steckanschlüsse sind bekannt und handelsüblich.

Fig. 14 und 15 zeigen das Verbinden des Schnellwechselrahmens 83 mit dem Arbeitsgerät 20. Das Arbeitsgerät umfasst in diesem Falle Greifer 101. Der fahrzeugseitige Leitungsträger 77 ist hier mit dem Schnellwechselrahmen 83 verschweißt bzw. geeignet verbunden ebenso wie die entsprechende Fördervorrichtung, die in Fig. 14 und 15 nicht zu sehen ist. Ein Fahrzeug (nicht gezeigt) nimmt über seine Trägerarme mit dem Schnellwechselrahmen 83 das Arbeitsgerät 21 auf. Dazu dreht der Fahrzeugführer den Schnellwechselrahmen 83 in eine Position, in der die Zapfen 85 in die Aufhängungen 25 von unten eingreifen. Über ein Eindrehen des Schnellwechselrahmens 83 lässt sich das Arbeitsgerät 21 an das Fahrzeug, an den Schnellwechselrahmen 83 heranziehen. In diesem Arbeitsschritt gleitet ebenso der geräteseitige Leitungsträger 3 in die entsprechende Aufnahme 71 im Verschubschlitten 47. Ferner sind noch die hydraulischen Leitungen 5 zu erkennen, die mit ihrem dem Leitungsträger 3 abgewandten Ende mit den jeweiligen Greifern 101 verbunden sind.

Fig. 15 zeigt den an der Rückseite des Arbeitsgeräts anliegenden Schnellwechselrahmen 83 und der geräteseitige Leitungsträger 3 bzw. die Kuppelplatte 3 befindet sich innerhalb der Aufnahme 71. Zum Heranziehen des Arbeitsgeräts 21 ist der Schnellwechselrahmen 83 in die Höhe gehoben und lässt sich nun über die beschriebenen Verriegelungszapfen 89 verriegeln.

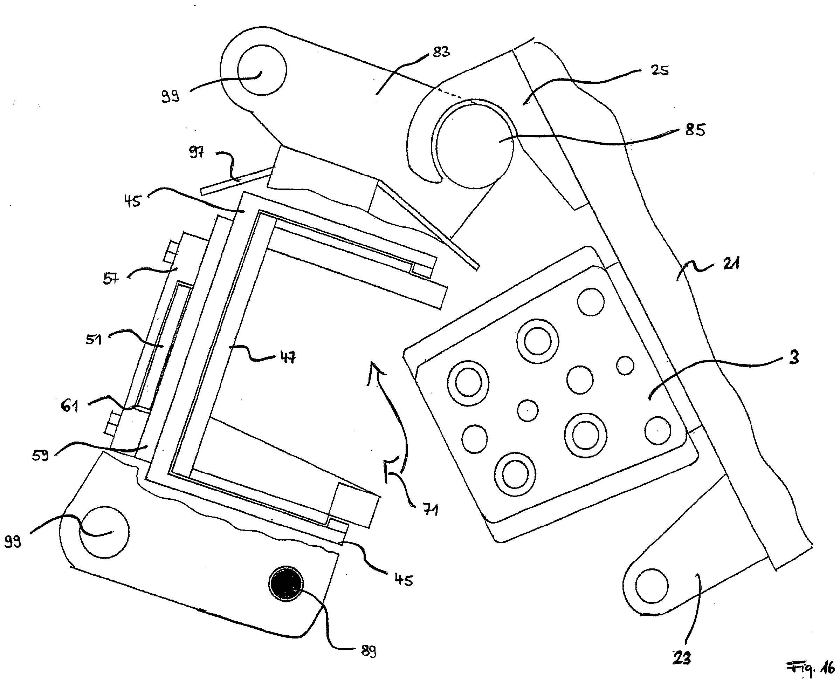

Fig. 16 zeigt einen Teilausschnitt des Schnellwechselrahmens 83 der darin angeordneten Fördervorrichtung mit ihrem Außenrahmen 45 und darin angeordneten Verschubschlitten 47. Der geräteseitige Leitungsträger 3 bzw. die senkrecht abstehende Kuppelplatte befindet sich kurz vor Einführung in die Aufnahme 71 und der Schnellwechselrahmen 83 steht in einem Winkel in etwa von 45° zum Arbeitsgerät 21 ab.

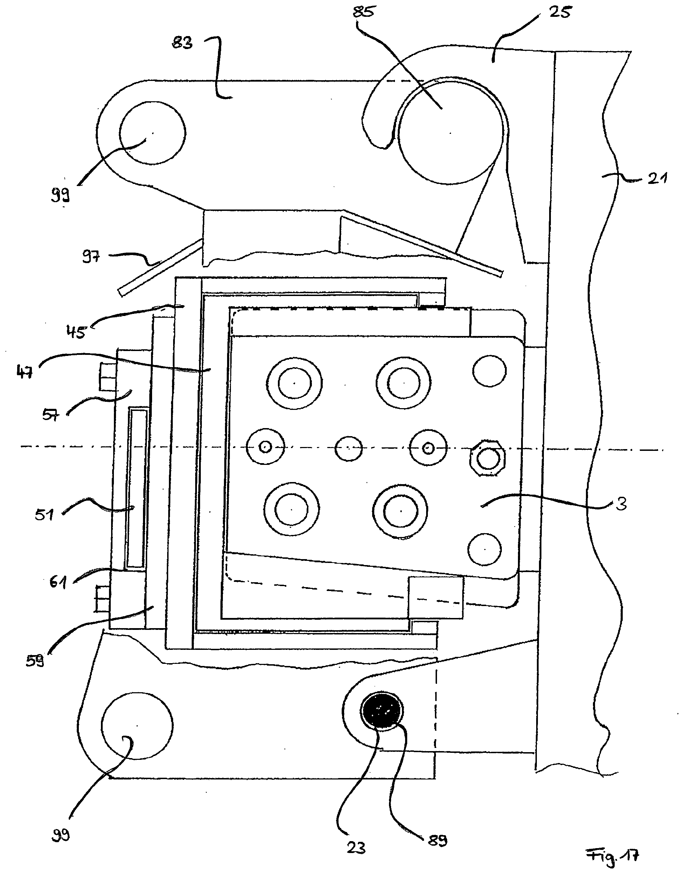

Fig. 17 zeigt eine Teilschnittdarstellung des am Arbeitsgerät 21 anliegenden Schnellwechselrahmens 83 im geschlossenen und verriegelten Zustand, in dem die Verriegelungszapfen 89 in den korrespondierenden Verriegelungsösen 23 noch nicht verriegelt sind. Der Leitungsträger bzw. die Kuppelplatte 3 ist vollständig in der Aufnahme 71 im Verschubschlitten 47 aufgenommen. In dieser Position lässt sich nun der Verschubschlitten 47 mit der in der Aufnahme 71 angeordneten Kuppelplatte bzw. dem geräteseitigen Leitungsträger 3 parallel zur Verriegelungsrichtung der Verriegelungszapfen 89 verfahren. Der Verschubschlitten 47 wird dabei über die hydraulische Geräteverriegelung über den Zylinder 87 im Schnellwechselrahmen 83 verfahren. Dieser Mechanismus und die dabei stattfindende Verriegelung werden nachfolgend in den Figuren 18 bis 26c erläutert.

Die Darstellung in Fig. 18 zeigt eine Ansicht aus Sicht des Fahrers auf die Rückseite der Verriegelungsvorrichtung 49. Die Führungsplatte 51 befindet sich in ihrer geöffneten Position, in der sich der Führungszapfen 63 am unteren Ende der diagonalen Steuerkulisse 53 befindet.

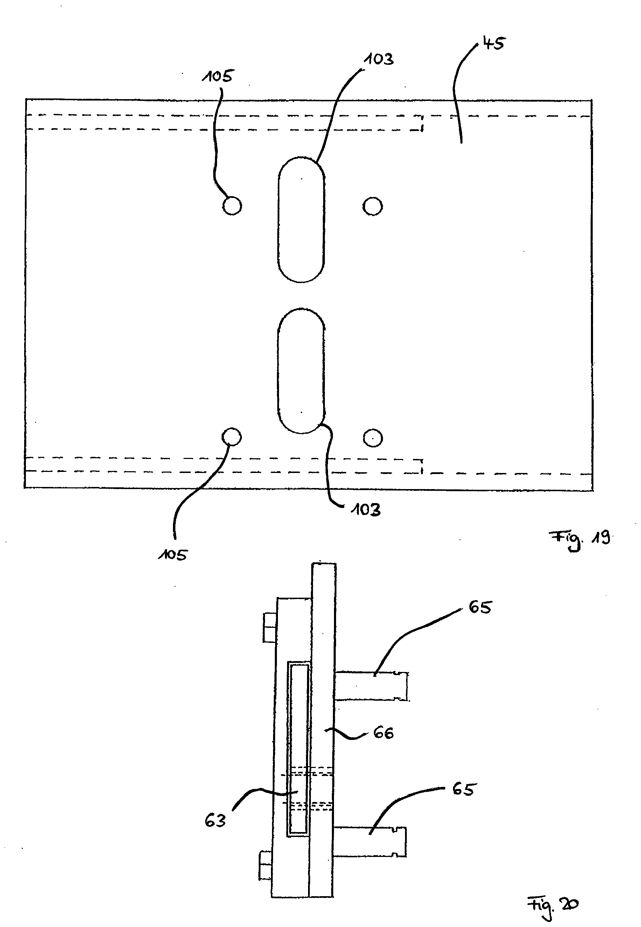

Fig. 19 zeigt diesbezüglich die Rückseite des Außenrahmens 45. Darin sind zwei vertikal verlaufende Langlöcher 103 angeordnet und daneben jeweils Ausnehmungen 105 zur Aufnahme der entsprechenden Befestigungsmittel der Führungsbügel 57. Die Führungszapfen bzw. Sicherungszapfen 65 sind in Fig. 18 von der Rückseite des Außenrahmens 45 in die Langlöcher 103 eingesetzt. Wie aus Fig. 20 ersichtlich, sind die Sicherungszapfen 65 mit einer Trägerplatte 66 verbunden. Auf der gegenüberliegenden Seite ist der Führungszapfen 63 mit der Trägerplatte 66 verbunden. Ist die Trägerplatte 66 in den Außenrahmen 45 eingesetzt, beispielsweise in eine Ausnehmung, oder auf den Außenrahmen 45 aufgesetzt, ragt also der Führungszapfen 63 nach hinten in die Steuerkulisse 53 der Führungsplatte 51. Dies ist in Fig. 18 schematisch durch die gepunkteten Linien dargestellt. Aus dieser Abbildung ist auch ersichtlich, dass die Verriegelungsvorrichtung 49, wie auch der Verschubschlitten 45 über die Verbindungsarme mit dem Verriegelungszylinder 87 gekoppelt sind. Dadurch wird das Ankuppeln aller Leitungen nur möglich, wenn das Arbeitsgerät am Fahrzeug korrekt eingerastet ist, denn nur dann, ist ein verriegeln mit dem Verriegelungszylinder 87 des Fahrzeuges oder Schnellwechselrahmen 87 möglich. Dies gewährleistet auch, dass es unmöglich ist das Arbeitsgerät 21 vom Fahrzeug zu trennen, und dabei die Leitungsverbindungen noch angeschlossen sind. Wenn das Arbeitsgerät 21 am Schnellwechselrahmen 83 eingerastet ist, dieser aber noch geöffnet ist, besteht auch zwischen Fahrzeug und Arbeitsgerät 21 keine Verbindung. Die Kuppelplatte 3 ist noch immer mit den Zentrierstiften 11 am Arbeitsgerät 21 gesichert. Der Außenrahmen 45 befindet sich neben dem fahrzeugseitigen Leitungsträger bzw. Kupplungsblock 77 mit dessen fahrzeugseitigen Hydraulikleitungen 95 sowie der Elektroleitung 96.

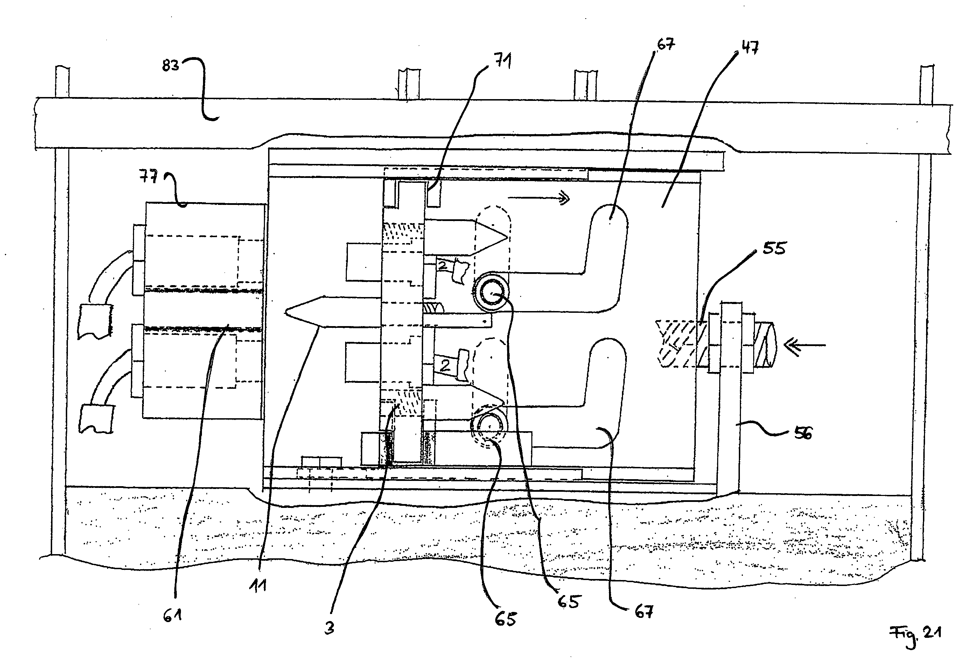

Fig. 21 zeigt eine Teilansicht des Schnellwechselrahmens 83 von vorne mit darin aufgenommenem Leitungsträger 3. Dieser ist in die Aufnahme 71 eingeführt. Der Verschubschlitten 47 befindet sich im geöffneten Zustand, in dem der Leitungsträger 3 bzw. die Kuppelplatte 3 vom Kupplungsblock 77 bzw. dem fahrzeugseitigen Leitungsträger beabstandet ist. Die Führungszapfen bzw. Sicherungsstifte 65 befinden sich an der linken Seite des horizontalen Schenkels des L-förmigen Langlochs 67. Die beiden Zentrierstifte 11, von denen der hier gezeigte Zentrierstift 11 den zweiten verdeckt, ragen in Richtung des Kupplungsblocks 77 in Richtung der dort angeordneten komplementären Aufnahme 61. Auf der rechten Seite sind die beiden Verbindungsarme 55 und 56 zur Kopplung der Platte 51 (nicht gezeigt) mit dem hier nicht gezeigten Hydraulikzylinder (vgl. Fig. 18) dargestellt.

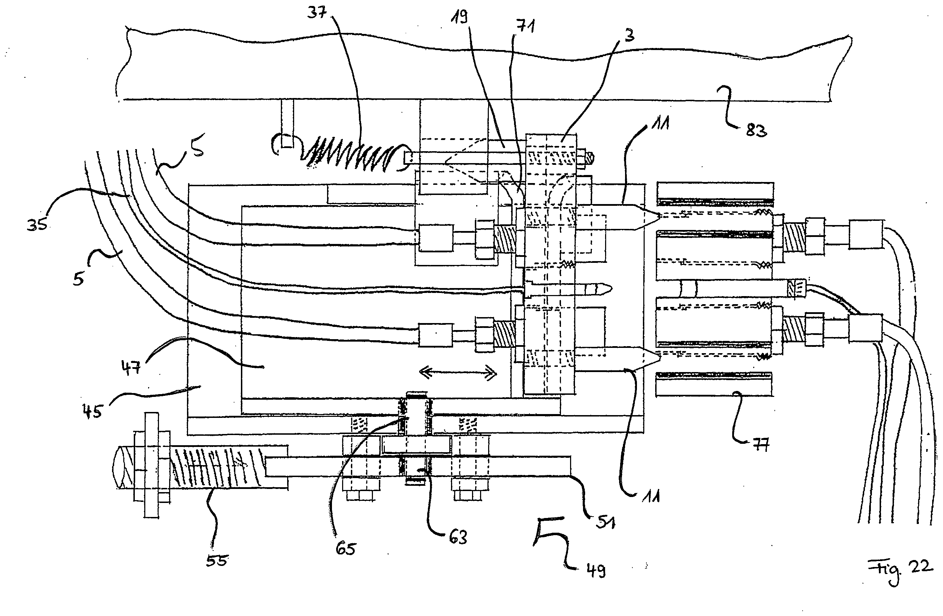

Fig. 22 zeigt eine Teilschnittdarstellung durch Figur 17 in einer Draufsicht von oben. Die Platte 51 befindet sich noch in ihrer Ausgangsposition. in der die Sicherungsstifte 65 am linken Ende des horizontalen Schenkels des L-förmigen Langlochs 67 jeweils anliegen. Die Zentrierstifte 11 des Leitungsträgers 3 werden dann beim weiteren Verriegeln über ein Verschieben des Verschubschlittens 47 in Richtung des fahrzeugseitigen Leitungsträgers bzw. Kupplungsblock 77 verschoben. Dabei ragen die Spitzen der Zentrierstifte 11 in die jeweilige komplementären Führungsausnehmungen 79 am Kupplungsblock 77. Die Zentrierstifte 19, von denen hier nur einer gezeigt ist, der den anderen verdeckt, befinden sich mit ihrem vorderen Ende jeweils noch in der Ausnehmung 31 am Ablageblock 29. Die Zentrierstifte sind an der Kuppelplatte 3 so angeordnet, dass jeweils zwei Stifte noch so lange geführt werden, bis die beiden anderen Stifte die Führungsaufnahmen bereits erreicht haben. Dadurch wird ein herausfallen der Kuppelplatte 3 verhindert. Die Rückhaltefeder 37 ist bereits etwas vorgespannt.

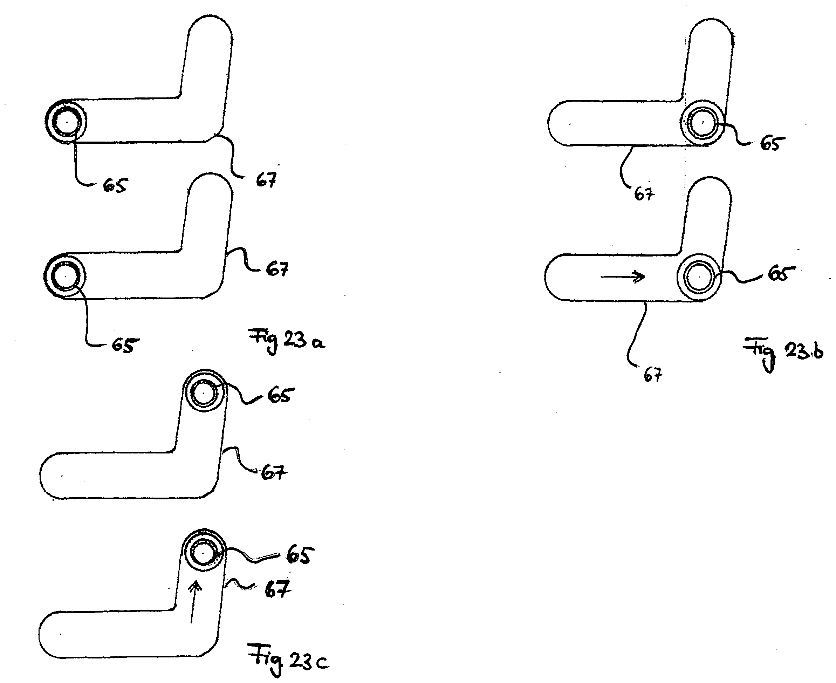

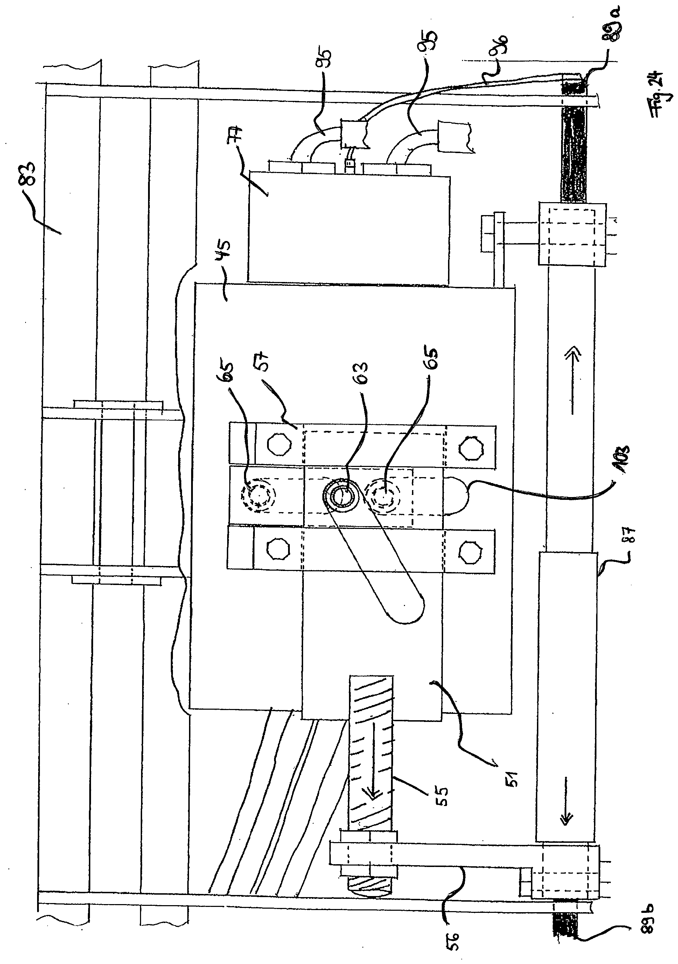

Fig. 23A bis 23C zeigen den Bewegungsablauf der Sicherungsstifte 65 in den L-förmigen Langlöchern 67. Fig. 23A zeigt die offene Position der Verriegelungsvorrichtung, Fig. 23B die mittlere Position aus Fig. 22 und Fig. 23C die geschlossenen bzw. verriegelte Position. Erst wenn die rechte Seite der Verriegelungszapfen 89 vollständig eingeschoben ist, wird der linke Verriegelungszapfen 89 ausgeschoben, wobei die Sicherungsvorrichtung 49 mitgeführt wird und die zwei Sicherungsstifte aus den vertikalen Langlöchern in die horizontalen Langlöcher (ABB.: 12) des Verschubschlittens 47 geschoben werden. Durch eine leichte Schrägstellung der beiden Langlöcher (vgl. Fig. 24 bis 26), wird der Verschubschlitten 45 mit der Kuppelplatte 3 durch die schräge Übersetzung der Langlöcher, gegen den Kuppelblock 77 gepresst. Dadurch ergibt sich eine feste Verbindung, welche sich auch bei nachlassender Fahrzeughydraulik und/oder Druckverlust nicht selbstständig öffnen kann.

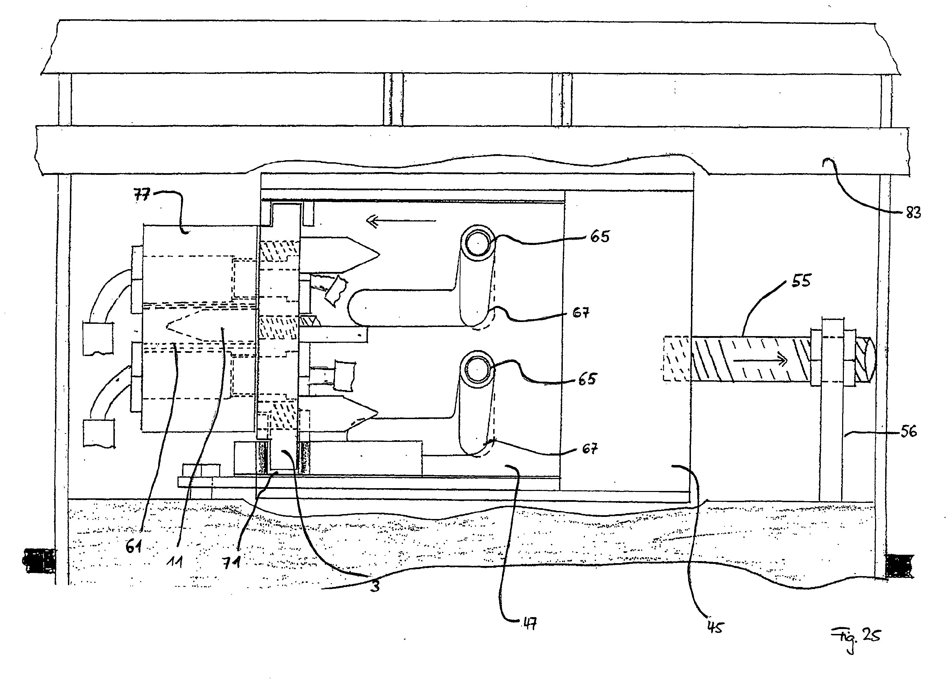

Fig. 24 und 25 zeigen jeweils zu den Fig. 18 und 21 korrespondierende Teilansichten jeweils im verriegelten Zustand der Verriegelungs- bzw. Sicherungsvorrichtung 49. Im verriegelten Zustand ist die Platte 51 über die Verbindungsarme 55 und 56 mit der Verriegelungsbewegung des Hydraulikzylinders 87 in Richtung des Pfeils nach links versetzt. Damit ist der Führungszapfen 63 in seiner Endposition am oberen Ende der Führungskulisse 53 angelangt. Zeitgleich sind die Sicherungsstifte 65 ebenso in ihrer oberen Position innerhalb der Ausnehmung 103 versetzt. Der Verschubschlitten 47 und mit ihm die Kuppelplatte 3 sind versetz und mit dem Kupplungsblock 77 fest verbunden. Der Schnellwechselrahmen 83 ist über seinen entsprechenden Verriegelungszapfen 89 in dieser Position mit dem Arbeitsgerät entsprechend über die Verriegelungsösen 23 verriegelt. Zur Verriegelung ist der Hydraulikzylinder 87 schwimmend gelagert, wobei der leicht gängigere Verriegelungszapfen 89a in Fig. 24 der rechte Verriegelungszapfen 89a zuerst verriegelt und dann der zweite Verriegelungszapfen 89b ausgefahren wird, der durch die L-förmigen Langlöcher gezwungen wird seinen Bewegungsablauf erst zu beginnen, wenn der Verriegelungszapfen 89a seinen Bewegungsablauf abgeschlossen hat. Beim Öffnen erfolgen diese Bewegungsabläufe in umgekehrter Reihenfolge.

Fig. 25 zeigt eine Teilansicht des verriegelten geräteseitigen Leitungsträgers bzw. der Kupplungsplatte 3, die vollständig in den Kupplungsblock 77 eingefahren ist. Die Führungszapfen bzw. Sicherungsstifte 65 befinden sich im Anschlag am oberen Ende des vertikal verlaufenden Schenkels der L-förmigen Steuerkulissen 67. Dieser horizontale Abschnitt verläuft teilweise angeschrägt. Der bzw. die Zentrierstifte 11 sind vollständig in der Führungsaufnahme 61 am fahrzeugseitigen Leitungsträger bzw. Kupplungsblock 77 aufgenommen. Die Kupplungsplatte 3 liegt fest im Kupplungsblock 77 an.

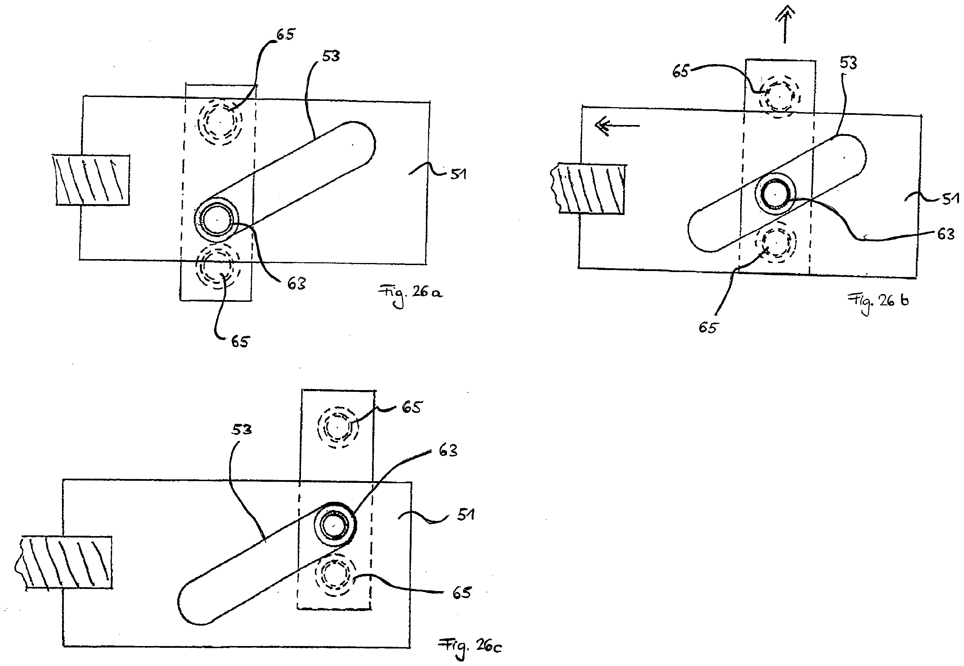

Schließlich zeigen die Figuren 26A - 26C den Bewegungsablauf des Führungszapfens 63 innerhalb der schräg verlaufenden Steuerkulisse 53 beim Verriegeln bzw. Entriegeln. Die Parallelbewegung der Sicherungsstifte 65 ist punktiert dargestellt. In Fig. 26A befindet sich die Verriegelungsvorrichtung in ihrer offenen Stellung, in Fig. 26B in ihrer mittleren Position und in Fig. 26C in der verriegelten Position in der der geräteseitige Leitungsträger hinterstellt und verriegelt ist, sodass eine entsprechende Fluiddichtigkeit bzw. Übertragung elektrischer Energie in der Elektroleitung sichergestellt ist.

Da die Verriegelungsvorrichtung 49 mit dem Hydraulikzylinder 87 gekoppelt ist, wird ein Ankuppeln der Leitung nur dann möglich, wenn der Leitungsträger 3 vollständig in der Aufnahme 71 aufgenommen ist. Nur in dieser Position ist ein Verriegeln der Verriegelungsvorrichtung über den Hydraulikzylinder 87 des Fahrzeugs möglich. Somit ist es ebenfalls ausgeschlossen, dass das hydraulische Gerät vom Fahrzeug getrennt wird, so lange die Leitungsverbindung über das automatische Kupplungssystem mit einander verbunden sind. Ebenso besteht keine Leitungsverbindung zwischen dem Kupplungsblock 77 und der Kuppelplatte 3, so lange der Schnellwechselrahmen 83 zwar an der Aufnahme 25 eingerastet ist, jedoch das Arbeitsgerät 21 noch nicht mit dem Schnellwechselrahmen 83 verriegelt ist. Vielmehr ist hier die Kuppelplatte immer noch über die Zentrierstifte 19 im Aufnahmeblock des Geräts 21 gelagert.

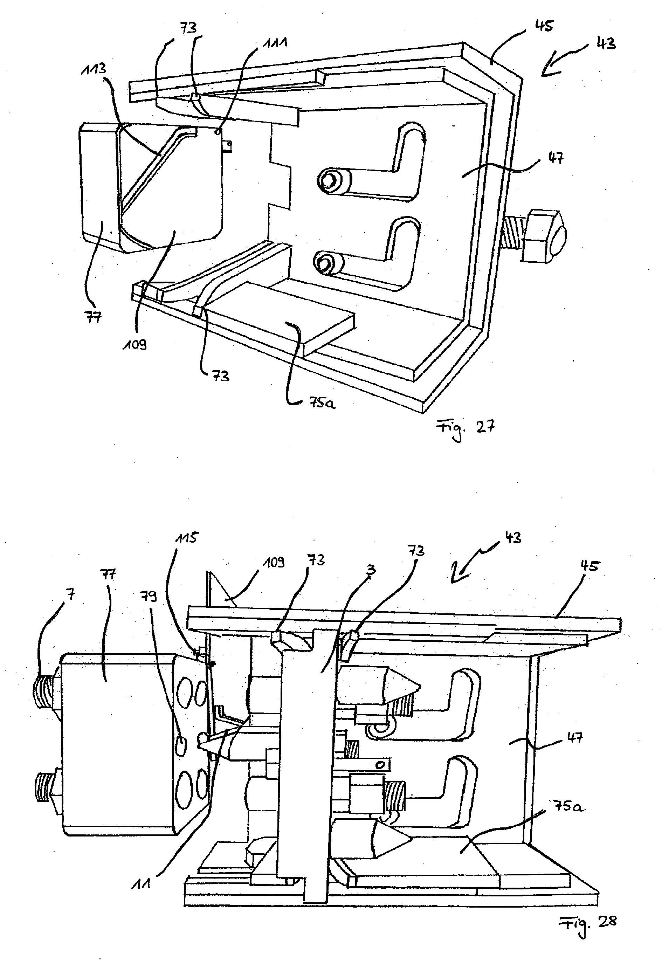

Fig. 27 bis Fig. 29B zeigen eine weitere Ausführungsform des fahrzeugseitigen Leitungsträger bzw. Kupplungsblocks 77, die sich von den vorausgegangenen Darstellungen durch eine Schutzabdeckung 109 unterscheidet. Die Schutzabdeckung 109 ist plattenförmig ausgebildet und entspricht in etwa in ihren Außenabmessungen den Außenabmessungen des Kupplungsblockes 77 auf der der Transportvorrichtung 43 zugewandten Seite. Die Schutzabdeckung 109 umfasst in etwa in ihrem vorderen Drittel eine in etwa diagonal verlaufende Führungsleiste 113, die in etwa lotrecht von der Schutzabdeckung 109 absteht.

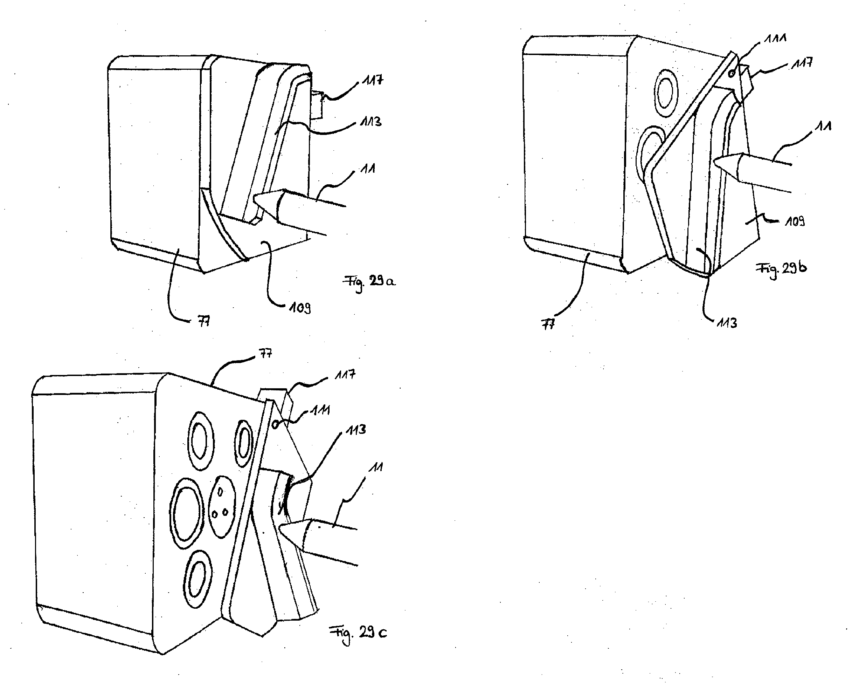

Beim Verbinden des geräteseitigen Leitungsträgers 3 mit dem Kupplungsblock 77 greift der vordere Zentrierstift 11, der der Transportvorrichtung 43 zugewandt ist mit seinem vorderen Ende an der Führungsleiste 113 an und verschwenkt die Schutzabdeckung 109 in Richtung des Fahrzeugs seitlich heraus. Dazu ist ein Stift 111 in der oberen Ecke des Kupplungsblocks 77 vorgesehen, der als Schwenkachse dient. Zusätzlich ist eine Feder 115 als Rückholfeder vorgesehen, die an einem Vorsprung 117 an der Schutzabdeckung 109 befestigt ist. Der Vorsprung 117 hat eine Doppelfunktion, einerseits dient er als Halterung für die Rückstellfeder 115 und anderseits als Endanschlag für die Schutzabdeckung 109 am Kupplungsblock 77 beim Ausschwenken. Beim Verschwenken spannt die Schutzabdeckung 109 die Rückholfeder 115 vor, so dass bei einem Entkopplungsvorgang beim Ausfahren des geräteseitigen Leitungsträgers aus der Transportvorrichtung 43, die Schutzabdeckung 109 automatisch in ihre Ausgangsposition zurück verschwenkt wird. Dieser Bewegungsablauf ist in den Figuren 29A - 29C schematisch dargestellt, wobei der Zentrierstift 11 an der Führungsleiste 113 angreift und die Schutzabdeckung heraus verschwenkt.

Die Schutzabdeckung 109 verhindert ein Verschmutzen bzw. eine Beschädigung der Leitungsanschlüsse im Kupplungsblock 77. Zusätzlich ist die Führungsleiste 113 an ihrer von der Schutzabdeckung 109 abgewandten Seite speziell geformt sein, etwa leicht umgebogen, um ein einfaches Angreifen des konisch zulaufenden Endes des Zentrierstiftes 11 zu ermöglichen.

Sofern am Arbeitswerkzeug keine Leitungen vorgesehen sein sollten und somit auch kein geräteseitiger Leitungsträger werden das Werkzeug und Fahrzeug in zuvor beschriebener Art und Weise miteinander verbunden, wobei jedoch die Schutzabdeckung 109 vor dem Kupplungsblock 77 liegen bleibt und diesen vor Verschmutzungen schützt.

Weitere Ausgestaltungen der Erfindung ergeben sich im Rahmen der nachfolgenden Patentansprüche.

## Patentansprüche

1. Automatisches Kupplungssystem (1) zum Verbinden von wenigstens einer hydraulischen und/oder elektrischen und/oder pneumatischen Leitung (95, 96) eines Fahrzeugs mit wenigstens einer hydraulischen und/oder elektrischen und/oder pneumatischen Leitung (5, 35) eines Arbeitsgeräts (21) umfassend
wenigstens ein geräteseitiges Aufnahmeelement (29) zur wenigstens teilweisen Aufnahme und Lagerung eines geräteseitigen Leitungsträgers (3) in oder am Arbeitsgerät (21), wobei der geräteseitige Leitungsträger (3) wenigstens einen Endabschnitt der wenigstens einen hydraulischen und/oder elektrischen und/oder pneumatischen, mit dem Arbeitsgerät (21) verbundenen Leitung (5, 35) trägt, und
wenigstens einen fahrzeugseitigen Leitungsträger (77), der wenigstens einen Endabschnitt der wenigstens einen hydraulischen und/oder elektrischen und/oder pneumatischen, mit dem Fahrzeug verbundenen Leitung (95, 96) trägt,
wobei eine Fördervorrichtung (43) vorgesehen ist, die ausgelegt ist, den geräteseitigen Leitungsträger (3) aus dessen Lagerungsposition zur lösbaren Verbindung der beiden Leitungsträger (3, 77) in eine fahrzeugseitige Verbindungsposition zu verbringen und in dieser zu halten, um eine Fluid- und/oder elektrische Verbindung der beiden wenigstens einen Leitungen (5, 35, 95, 96) zu ermöglichen, wobei der geräteseitige Leitungsträger (3) in seiner Verbindungsposition frei vom geräteseitigen Aufnahmeelement (29) gelagert ist und **dadurch gekennzeichnet, dass** die Fördervorrichtung (43) einen bewegbaren Schlitten (47) umfasst, der in einem ihn umgebenden Außenrahmen (45) verschiebbar gelagert ist.

2. Kupplungssystem (1) nach Anspruch 1, bei dem das Aufnahmeelement (29) als Ablageblock am Arbeitsgerät (21) ausgebildet ist und wenigsten eine Ausnehmung (31a, b) zur Aufnahme des geräteseitigen Leitungsträgers (3) umfasst.

3. Kupplungssystem (1) nach Anspruch 1 oder 2, bei dem in oder am Arbeitsgerät (21) wenigstens ein elastisches Element (37) vorgesehen ist, um nach einem Lösen der Verbindung zwischen den Leitungsträgern (3, 77) den geräteseitigen Leitungsträger (3) in seiner Lagerungsposition zu halten.

4. Kupplungssystem (1) nach einem der vorstehenden Ansprüche, bei dem der geräteseitige Leitungsträger (3) in seiner Verbindungsposition nur über die wenigstens eine Leitung (5, 35) und das elastische Element mit dem Arbeitsgerät (21) verbunden ist.

5. Kupplungssystem (1) nach einem der vorstehenden Ansprüche, bei dem der geräteseitige Leitungsträger (3) zur Aufnahme in die Fördervorrichtung (43) vom Arbeitsgerät (21) absteht.

6. Kupplungssystem (1) nach einem der vorstehenden Ansprüche, bei dem der geräteseitige Leitungsträger (3) wenigstens ein Führungselement (11, 19) zur Führung bei Verbindung des Leitungsträgers (3) mit dem Aufnahmeelement (29) oder dem fahrzeugseitigen Leitungsträger (77) umfasst und das Aufnahmeelement (29) und der fahrzeugseitige Leitungsträger (77) wenigstens eine korrespondierende Führungsaufnahme (31a,b, 79) zur Aufnahme des wenigstens einen Führungselements (11, 19) umfasst.

7. Kupplungssystem (1) nach einem der Ansprüche 1 bis 4, bei dem der fahrzeugseitige Leitungsträger (77) und/oder das Aufnahmeelement (29) wenigstens ein Führungselement (11, 19) zur Führung bei Verbindung mit dem geräteseitige Leitungsträger (3) umfasst und der geräteseitige Leitungsträger (3) wenigstens eine korrespondierende Führungsaufnahme zur Aufnahme des wenigstens einen Führungselements umfasst.

8. Kupplungssystem (1) nach einem der vorstehenden Ansprüche, bei dem die Fördervorrichtung (43) an dem Fahrzeug befestigt ist oder in einem mit dem Fahrzeug verbindbaren Rahmen (83), insbesondere einem Schnellwechselrahmen, eingesetzt und montiert ist.

9. Kupplungssystem (1) nach einem der vorstehenden Ansprüche, bei dem der fahrzeugseitige Leitungsträger (77) fest mit dem Fahrzeug oder dem Rahmen (83) verbunden ist.

10. Kupplungssystem (1) nach Anspruch 8 oder 9, bei dem am Fahrzeug und/oder Rahmen (83) eine erste Schutzabdeckung (97) für die Fördervorrichtung (43) und/oder den fahrzeugseitigen Leitungsträger (77) vorgesehen ist.

11. Kupplungssystem (1) nach einem der vorstehenden Ansprüche, bei dem am fahrzeugseitigen Leitungsträger (77) eine verschwenkbare zweite Schutzabdeckung (109) vorgesehen ist, die insbesondere ein Führungselement (113) umfasst, das ausgelegt ist, um beim Verbinden des geräteseitigen Leitungsträgers (3) mit dem fahrzeugseitigen Leitungsträger (77) mit dem wenigstens einen Führungselement (11, 19) derart zusammenzuwirken, dass die Schutzabdeckung (109) verschwenkt wird und den fahrzeugseitigen Leitungsträger (77) zur Verbindung mit dem geräteseitigen Leitungsträger (3) freigibt.

12. Kupplungssystem (1) nach einem der vorstehenden Ansprüche, bei dem die Fördervorrichtung (43) eine Aufnahme (71) für den geräteseitigen Leitungsträger (3) und dessen Lagerung umfasst.

13. Kupplungssystem (1) nach einem der vorstehenden Ansprüche, bei dem die Fördervorrichtung (43) wenigstens ein Sicherungselement (75a, b) umfasst, das angeordnet und ausgelegt ist, um ein Einführen des geräteseitigen Leitungsträgers (3) in die Aufnahme (71) nur in einer definierten Position zu ermöglichen.

14. Kupplungssystem (1) nach einem der vorstehenden Ansprüche, bei dem der Außenrahmen (45) wenigstens ein Führungselement (69) zur Führung des Schlittens (47) umfasst.

15. Kupplungssystem (1) nach einem der vorstehenden Ansprüche, bei dem die Fördervorrichtung (43) zur Förderung des geräteseitigen Leitungsträgers (3) pneumatisch oder elektrisch oder hydraulisch angetrieben ist und insbesondere einen mit ihr gekoppelten Zylinder (87) umfasst.

16. Kupplungssystem (1) nach einem der vorstehenden Ansprüche, bei dem eine Sicherungsvorrichtung (49) vorgesehen ist, die die beiden Leitungsträger (3, 77) in der Verbindungsposition zusätzlich gegeneinander verriegelt.

17. Kupplungssystem (1) nach Anspruch 16, bei dem die Sicherungsvorrichtung (49) eine Zwangssteuerung umfasst, um ein bewegbares Verriegelungselement in seine Verriegelungsposition und seine Freigabeposition zu verbringen.

18. Kupplungssystem (1) nach einem der vorstehenden Ansprüche, bei dem am Fahrzeug oder am Rahmen (83) ein Verbindungselement (85) zu dessen Kopplung mit einem Verbindungselement (25) am Arbeitsgerät (21) vorgesehen ist.

19. Fahrzeug umfassend wenigstens ein Arbeitsgerät und ein Kupplungssystem (1) gemäß einem der Ansprüche 1 bis 18.

## Claims

1. An automatic coupling system (1) for connecting at least one hydraulic and/or electric and/or pneumatic line (95, 96) of a vehicle to at least one hydraulic and/or electric and/or pneumatic line (5, 35) of a piece of equipment (21) comprising:
at least one equipment-side receiving element (29) for at least partially receiving and mounting an equipment-side line support (3) in or on the piece of equipment (21), wherein the equipment-side line support (3) supports at least one end section of the at least one hydraulic and/or electric and/or pneumatic line (5, 35) connected to the piece of equipment (21), and
at least one vehicle-side line support (77) which supports at least one end section of the at least one hydraulic and/or electric and/or pneumatic line (95, 96) connected to the vehicle,
wherein
a conveying device (43) is provided which is designed to move the equipment-side line support (3) out of the mounting position thereof and to bring it into a vehicle-side connection position and hold it there for the detachable connection of the two line supports (3, 77) in order to enable a fluid and/or electrical connection of both at least one lines (5, 35, 95, 96), wherein the equipment-side line support (3) is mounted in the connection position thereof free from the equipment-side receiving element (29) and **characterized in that** the conveying device (43) comprises a movable carriage (47) which is displaceably mounted in an outer frame (45) surrounding the same.

2. The coupling system (1) according to claim 1, wherein the receiving element (29) is designed as a resting block on the piece of equipment (21) and comprises at least one recess (31a, b) for receiving the device-side line support (3).

3. The coupling system (1) according to claim 1 or 2, wherein at least one elastic element (37) is provided in or on the piece of equipment (21) in order to hold the device-side line support (3) in its mounting position after the connection between the line supports (3, 77) has been released.

4. The coupling system (1) according to any one of the preceding claims, wherein the device-side line support (3) is connected to the piece of equipment (21) in its connection position only via the at least one line (5, 35) and the elastic element.

5. The coupling system (1) according to any one of the preceding claims, wherein the device-side line support (3) protrudes from the piece of equipment (21) for receiving the conveyor device (43).

6. The coupling system (1) according to any one of the preceding claims, wherein the device-side line support (3) comprises at least one guide element (11, 19) for guiding when connecting the line support (3) to the receiving element (29) or the vehicle-side line support (77), and the receiving element (29) and the vehicle-side line support (77) comprise at least one corresponding guide receptacle (31a, b, 79) for receiving the at least one guide element (11, 19).

7. The coupling system (1) according to any one of claims 1 to 4, wherein the vehicle-side line support (77) and/or the receiving element (29) comprise(s) at least one guide element (11, 19) for guidance when connected to the device-side line support (3), and the device-side line support (3) comprises at least one corresponding guide receptacle for receiving the at least one guide element.

8. The coupling system (1) according to any one of the preceding claims, wherein the conveying device (43) is attached to the vehicle or is inserted and installed in a frame (83) which can be connected to the vehicle, in particular a quick-change frame.

9. The coupling system (1) according to any one of the preceding claims, wherein the vehicle-side line support (77) is firmly connected to the vehicle or the frame (83).

10. The coupling system (1) according to claim 8 or 9, wherein a first protective cover (97) for the conveyor device (43) and/or the vehicle-side line support (77) is provided on the vehicle and/or frame (83).

11. The coupling system (1) according to any one of the preceding claims, wherein a pivotable second protective cover (109) is provided on the vehicle-side line support (77), which in particular comprises a guide element (113) which is designed to interact with the at least one guide element (11, 19) in such a way that the protective cover (109) is pivoted and releases the vehicle-side line support (77) for connection to the device-side line support (3), when connecting the device-side line support (3) to the vehicle-side line support (77).

12. The coupling system (1) according to any one of the preceding claims, wherein the conveying device (43) comprises a receptacle (71) for the device-side line support (3) and its mounting.

13. The coupling system (1) according to any one of the preceding claims, wherein the conveying device (43) comprises at least one securing element (75a, b) which is arranged and designed to only allow the device-side line support (3) to be inserted into the receptacle (71) in a single defined position.

14. The coupling system (1) according to any one of the preceding claims, wherein the outer frame (45) comprises at least one guide element (69) for guiding the carriage (47).

15. The coupling system (1) according to any one of the preceding claims, wherein the conveying device (43) for conveying the device-side line support (3) is pneumatically or electrically or hydraulically driven and in particular comprises a cylinder (87) coupled to it.

16. The coupling system (1) according to any one of the preceding claims, wherein a securing device (49) is provided which additionally interlocks the two line supports (3, 77) in the connection position.

17. The coupling system (1) according to claim 16, wherein the securing device (49) comprises a forced control to move a movable locking element into its locking position and its release position.

18. The coupling system (1) according to any one of the preceding claims, wherein a connecting element (85) is provided on the vehicle or on the frame (83) for coupling it to a connecting element (25) on the piece of equipment (21).

19. A vehicle comprising at least one piece of equipment and a coupling system (1) according to any one of claims 1 to 18.

## Revendications

1. Système de couplage automatique (1) destiné à relier au moins une conduite (95, 96) hydraulique et/ou électrique et/ou pneumatique d'un véhicule à au moins une conduite (5, 35) hydraulique et/ou électrique et/ou pneumatique d'un appareil de travail (21), comprenant
au moins un élément de réception côté appareil (29) destiné à recevoir et à stocker au moins en partie un support de conduite côté appareil (3) dans ou sur l'appareil de travail (21), dans lequel le support de conduite (3) côté appareil supporte au moins un segment terminal de l'au moins une conduite (5, 35) hydraulique et/ou électrique et/ou pneumatique reliée à l'appareil de travail (21), et
au moins un support de conduite côté véhicule (77), qui supporte au moins un segment terminal de l'au moins une conduite (95, 96) hydraulique et/ou électrique et/ou pneumatique reliée au véhicule,
dans lequel
est prévu un dispositif de transport (43), qui est conçu pour amener le support de conduite côté appareil (3) depuis sa position de stockage pour relier de manière détachable les deux supports de conduite (3, 77) dans une position de liaison côté véhicule et le maintenir dans celle-ci pour permettre une liaison fluidique et/ou électrique des deux au moins une conduite (5, 35, 95, 96), dans lequel le support de conduite côté appareil (3) est stocké dans sa position de liaison sans l'élément de réception côté appareil (29) et
**caractérisé en ce que**
le dispositif de transport (43) comprend un chariot mobile (47), qui est stocké de manière à pouvoir être coulissé dans un châssis extérieur (45) l'entourant.

2. Système de couplage (1) selon la revendication 1, où l'élément de réception (29) est réalisé en tant que bloc de dépôt sur l'appareil de travail (21) et comprend au moins un évidement (31a, b) destiné à recevoir le support de conduite côté appareil (3).

3. Système de couplage (1) selon la revendication 1 ou 2, où au moins un élément élastique (37) est prévu dans ou sur l'appareil de travail (21) pour maintenir, après un détachement de la liaison entre les supports de conduite (3, 77), le support de conduite côté appareil (3) dans sa position de stockage.

4. Système de couplage (1) selon l'une quelconque des revendications précédentes, où le support de conduite côté appareil (3) est relié à l'appareil de travail (21) dans sa position de liaison seulement par l'intermédiaire de l'au moins une conduite (5, 35) et de l'élément élastique.

5. Système de couplage (1) selon l'une quelconque des revendications précédentes, où le support de conduite côté appareil (3) dépasse de l'appareil de travail (21) pour être reçu dans le dispositif de transport (43).

6. Système de couplage (1) selon l'une quelconque des revendications précédentes, où le support de conduite côté appareil (3) comprend au moins un élément de guidage (11, 19) destiné au guidage lors de la liaison du support de conduite (3) à l'élément de réception (29) ou au support de conduite côté véhicule (77), et l'élément de réception (29) et le support de conduite côté véhicule (77) comprennent au moins un logement de guidage (31a, b, 79) correspondant destiné à recevoir l'au moins un élément de guidage (11, 19).

7. Système de couplage (1) selon l'une quelconque des revendications 1 à 4, où le support de conduite côté véhicule (77) et/ou l'élément de réception (29) comprennent au moins un élément de guidage (11, 19) destiné au guidage lors de la liaison au support de conduite côté appareil (3) et le support de conduite côté appareil (3) comprend au moins un système de réception de guidage correspondant destiné à recevoir l'au moins un élément de guidage.

8. Système de couplage (1) selon l'une quelconque des revendications précédentes, où le dispositif de transport (43) est fixé sur le véhicule ou est inséré et monté dans un châssis (83), en particulier un châssis de changement rapide, pouvant être relié au véhicule.

9. Système de couplage (1) selon l'une quelconque des revendications précédentes, où le support de conduite côté véhicule (77) est relié de manière solidaire au véhicule ou au châssis (83).

10. Système de couplage (1) selon la revendication 8 ou 9, où un premier recouvrement de protection (97) pour le dispositif de transport (43) et/ou le support de conduite côté véhicule (77) est prévu sur le véhicule et/ou le châssis (83).

11. Système de couplage (1) selon l'une quelconque des revendications précédentes, où est prévu sur le support de conduite côté véhicule (77) un deuxième recouvrement de protection (109) pouvant être pivoté, qui comprend en particulier un élément de guidage (113), qui est conçu pour coopérer, lors de la liaison du support de conduite côté appareil (3) au support de conduite côté véhicule (77) avec l'au moins un élément de guidage (11, 19) de telle manière que le recouvrement de protection (109) est pivoté et libère le support de conduite côté véhicule (77) destiné à être relié au support de conduite côté appareil (3).

12. Système de couplage (1) selon l'une quelconque des revendications précédentes, où le dispositif de transport (43) comprend un système de réception (71) pour le support de conduite côté appareil (3) et son stockage.

13. Système de couplage (1) selon l'une quelconque des revendications précédentes, où le dispositif de transport (43) comprend au moins un élément de blocage (75a, b), qui est disposé et conçu pour permettre une introduction du support de conduite côté appareil (3) dans le système de réception (71) seulement dans une position définie.

14. Système de couplage (1) selon l'une quelconque des revendications précédentes, où le châssis extérieur (45) comprend au moins un élément de guidage (69) destiné au guidage du chariot (47).

15. Système de couplage (1) selon l'une quelconque des revendications précédentes, où le dispositif de transport (43) est entraîné de manière pneumatique ou électrique ou hydraulique pour transporter le support de conduite côté appareil (3) et comprend en particulier un cylindre (87) couplé audit dispositif de transport.

16. Système de couplage (1) selon l'une quelconque des revendications précédentes, où un dispositif de blocage (49) est prévu, lequel verrouille en supplément les deux supports de conduite (3, 77) mutuellement dans la position de liaison.

17. Système de couplage (1) selon la revendication 16, où le dispositif de blocage (49) comprend une commande forcée pour amener un élément de verrouillage mobile dans sa position de verrouillage et sa position de libération.

18. Système de couplage (1) selon l'une quelconque des revendications précédentes, où un élément de liaison (85) est prévu, pour son couplage à un élément de liaison (25) sur l'appareil de travail (21), sur le véhicule ou sur le châssis (83).

19. Véhicule comprenant au moins un appareil de travail et un système de couplage (1) selon l'une quelconque des revendications 1 à 18.
